# EUROPEAN PATENT SPECIFICATION

(11) **EP 4 009 697 B1**
(45) Date of publication and mention of the grant of the patent: **08.10.2025**
(21) Application number: 20846494.1
(22) Date of filing: 16.06.2020
(51) Int. Cl.: H04W 72/0446, H04L 43/0852, H04L 43/0876, H04W 28/20, H04J 3/16, H04L 41/0896, H04L 49/351, H04L 47/263

(54) **BANDWIDTH INCREASING AND REDUCING METHOD AND APPARATUS, STORAGE MEDIUM, AND ELECTRONIC APPARATUS**
VERFAHREN UND VORRICHTUNG ZUR BANDBREITENERHÖHUNG UND -REDUZIERUNG, SPEICHERMEDIUM UND ELEKTRONISCHES GERÄT
PROCÉDÉ ET APPAREIL D'AGRANDISSEMENT ET DE RÉDUCTION DE BANDE PASSANTE, SUPPORT DE STOCKAGE ET APPAREIL ÉLECTRONIQUE

(30) Priority: 01.08.2019 CN 201910709107
(43) Date of publication of application: 08.06.2022
(73) Proprietor: ZTE Corporation, Shenzhen, Guangdong 518057 (CN)
(72) Inventor: ZHAN, Zhiguo, Shenzhen, Guangdong 518057 (CN); LIU, Aihua, Shenzhen, Guangdong 518057 (CN); CHEN, Song, Shenzhen, Guangdong 518057 (CN)
(74) Representative: Novagraaf Technologies
(86) International application number: PCT/CN2020/096378
(87) International publication number: WO 2021/017672

(56) References cited:
- EP-A1- 3 790 242
- WO-A1-2019/128467
- CN-A- 108 632 061
- CN-A- 108 777 667
- CN-A- 109 688 016
- CN-A- 109 996 296
- OIF: "IA OIF-FLEXE-01.0 Flex Ethernet Implementation Agreement", 1 March 2016 (2016-03-01), pages 1 - 31, XP055459137, Retrieved from the Internet <URL:http://www.oiforum.com/wp-content/uploads/OIF-FLEXE-01.0.pdf> [retrieved on 20180314]
- QIUYOU WU HUAWEI TECHNOLOGIES CO ET AL: "Draft Recommendation ITU-T G.7044 (for consent);TD 462 (PLEN/15)", ITU-T DRAFT ; STUDY PERIOD 2009-2012, INTERNATIONAL TELECOMMUNICATION UNION, GENEVA ; CH, vol. 11/15, 12 December 2011 (2011-12-12), pages 1 - 30, XP044040095
- MAARTEN VISSERS HUAWEI TECHNOLOGIES CO ET AL: "Considerations on the mapping of FlexE Client and Subrate signals into OTN;C 1195", ITU-T DRAFT ; STUDY PERIOD 2013-2016, INTERNATIONAL TELECOMMUNICATION UNION, GENEVA ; CH, vol. 11/15, 8 June 2015 (2015-06-08), pages 1 - 13, XP044136869
- HUSSAIN R VALIVETI K PITHEWAN INFINERA CORP I: "FlexE Usecases; draft-hussain-ccamp-flexe-usecases-00.txt", FLEXE USECASES; DRAFT-HUSSAIN-CCAMP-FLEXE-USECASES-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 20 June 2016 (2016-06-20), pages 1 - 18, XP015113586
- STEPHEN J TOWNBRIDGE , DAVID R. STAUFFER: "Flex Ethernet 2.0 Implementation Agreement IA # OIF-FLEXE-02.0", OPTICAL INTERNET WORKING FORUM, 22 June 2018 (2018-06-22), pages 1 - 51, XP055776318

## Description

### Technical Field

The present disclosure relates to the field of communications, and in particular to a bandwidth increasing or reducing method, a storage medium, and an electronic apparatus.

### Background

The International Telecommunications Union-Telecommunications Standardization Sector (ITU-T) launched a G.mtn standard in October 2018 with the purpose of formulating international standards for 5^{th} Generation (5G) bearers. Two layers are defined in the project document: a path layer and a section layer. The path layer is responsible for providing flexible network connections for carrying customer services and providing Operation, Administration and Maintenance (OAM), and complies with 64B/66B coding rules in IEEE 802.3 clause 82. The OAM functions include connection verifications, PM, path status and delay measurement, and overhead supporting a Sub-Network Connection Protection (SNCP) protection. The section layer is provided for enabling a frame format to reuse a Flexible Ethernet (FlexE) definition to the maximum extent, and includes support for binding 50GBASE R, 100GBASE R, 200GBASE R, and 400GBASE R PMD. The frame format only uses the 64B/66B block defined by IEEE 802.3 clause 82, so that the lower-layer Ethernet protocol stack can be used in the same way as the FlexE.

The G.mtn standard has much relevance to the FlexE technology. The section layer of the G.mtn is a standard that reuses the FlexE to a large extent.

The FlexE is a research initiated by the International Organization for Standardization Optical Internetworking Forum (OIF) in March 2015 and the relevant technical documents were formally voted and passed in March 2016. The FlexE technology provides a general mechanism for transmitting a series of services with different Media Access Control (MAC) rates. The transmitted service may be a service with a large single MAC rate or a collection of multiple services with small MAC rates, and is no longer limited to a service with a single MAC rate.

In an overhead field of the FlexE, there are two fields, i.e., calendar A and calendar B, for indicating the configurations of the two calendars. Which calendar is currently used is identified by a C field. The C field will appear in the FlexE overhead for three times, each time the C field occupies 1 bit and has a value of 0 or 1. In general, in the process of a FlexE frame (containing 8 overhead blocks), the C field should be the same. However, if there is an abnormal situation, for example, the C field takes 0 twice and 1 once, then a majority decision is required so as to determine the value of the C field. The C field being 0 represents that the calendar A is currently used, and the C field being 1 represents that the calendar B is currently used.

If the FlexE needs to switch a calendar, such as switching to the calendar B from the current calendar A, then a local node and a remote node need to negotiate interactively through two fields of CR and CA in the FlexE overhead. Herein, the CR represents a calendar switch request, and the CA represents a calendar switch acknowledge. The local node sets the value of the CR in the FlexE overhead to 1, and the remote node completes the corresponding preparations after receiving the FlexE overhead, and sets the value of the CA in the FlexE overhead to 1. After receiving the confirmation of the CA, the local node sets the value of the C field to 1 in the next FlexE overhead, representing a formal start of the configuration of the calendar B.

If only the calendar switching of two nodes is involved in a network, then the above method in the FlexE standard can work properly. But in a metropolitan area transport network, the lossless adjustment of the bandwidth cannot be realized, and the bandwidth adjustment manner is not perfect.

Regarding the problem that, in the metropolitan area transport network, the lossless adjustment of the bandwidth cannot be realized and that the bandwidth adjustment manner is not perfect in the related technology, no effective technical solution has been proposed.

The related document (OIF: "IA OIF-FLEXE-01.0 Flex Ethernet Implementation Agreement") discloses a Flex Ethernet implementation Agreement. The related document (CN 108777667 A) discloses a method and device for adjusting bandwidth of transmission channel in flexible ethernet. The related document (QIUYOU WU HUAWEI TECHNOLOGIES CO ET AL: "Draft Recommendation ITU-T 6.7044 (for consent)) discloses a draft recommendation ITU-T G.7044. The related document (MAARTEN VISSERS HUAWEI TECHNOLOGIES CO ET AL: "Considerations on the mapping of FIexE Client and Subrate signals into OTN;C 1195) discloses a considerations on the mapping of F1exE Client and Subrate signals into OTN.

### Summary

The embodiments of the present disclosure provide a bandwidth increasing or reducing method and apparatus, a storage medium, and an electronic apparatus, which can solve the problem that in the metropolitan area transport network, the lossless adjustment of the bandwidth cannot be realized, and the bandwidth adjustment manner is not perfect in the related technology.

The present disclosure is set out in the appended set of claims.

With the embodiments of the present disclosure, the respective nodes acquire the slot reduction request according to the first specified rule, wherein the slot reduction confirmation message is used for instructing the respective nodes to start the slot adjustment of the section layer within the predetermined period of time; in a case where the respective nodes are capable of processing the slot reduction request, the respective nodes send the slot reduction confirmation message according to the second specified rule; the respective nodes reduce a bandwidth of an entire path layer corresponding to the respective nodes based on the slot reduction confirmation message, and reduce the second slots of the section layer between every two nodes in the respective nodes after the reduction of the bandwidth of the respective nodes is completed. The technical solution solves the problem that in the metropolitan area transport network, the lossless adjustment of the bandwidth cannot be realized, and the bandwidth adjustment manner is not perfect in the related technology.

### Brief Description of the Drawings

The drawings described herein are used to provide a further understanding of the present disclosure and constitute a part of the present application. The exemplary embodiments of the present disclosure and their descriptions are used to explain the present disclosure, and do not constitute an improper limitation of the present disclosure. In the accompany drawings:
Fig. 1 is an overall flowchart of an exemplary bandwidth adjustment method according to an embodiment of the present disclosure;
Fig. 2 is a schematic diagram of a format of a path layer notification message according to an embodiment of the present disclosure;
Fig. 3 is a flowchart of an exemplary bandwidth increasing method according to an embodiment of the present disclosure;
Fig. 4 is a flowchart of an exemplary bandwidth increasing process according to an embodiment of the present disclosure;
Fig. 5 is a flowchart of an exemplary successful bandwidth increasing process according to an embodiment of the present disclosure;
Fig. 6 is a flowchart of an exemplary failed bandwidth increasing process according to an embodiment of the present disclosure;
Fig. 7 is another flowchart of an exemplary failed bandwidth increasing process according to an embodiment of the present disclosure;
Fig. 8 is a further flowchart of an exemplary failed bandwidth increasing process according to an embodiment of the present disclosure;
Fig. 9 is a structure diagram of an exemplary bandwidth increasing apparatus according to an embodiment of the present disclosure;
Fig. 10 is another structure diagram of an exemplary bandwidth increasing apparatus according to an embodiment of the present disclosure;
Fig. 11 is a flowchart of an exemplary bandwidth reducing method according to an embodiment of the present disclosure;
Fig. 12 is a flowchart of an exemplary bandwidth reducing process according to an embodiment of the present disclosure;
Fig. 13 is a flowchart of an exemplary successful bandwidth reducing process according to an embodiment of the present disclosure;
Fig. 14 is a structure diagram of an exemplary bandwidth reducing apparatus according to an embodiment of the present disclosure;
Fig. 15 is another structure diagram of an exemplary bandwidth reducing apparatus according to an embodiment of the present disclosure.

### Detailed Description

Hereinafter, the present disclosure will be described in detail with reference to the drawings and in conjunction with embodiments. It should be noted that the embodiments in the present application and the features in the embodiments can be combined with each other if there is no conflict.

It should be noted that the terms "first" and "second" etc. in the specification and claims of the present disclosure and the above drawings are used to distinguish similar objects, and not necessarily used to describe a specific order or sequence.

The following explains the overall process of a bandwidth adjustment of a metropolitan area transport network with examples, but the examples are not used to limit the technical solutions of the embodiments of the present disclosure. The technical solutions of the examples of the present disclosure are as follows.

In order to better understand the embodiments of the present disclosure and the technical solutions of the exemplary embodiments of the present disclosure, the following explanation is provided first.
1. A bandwidth adjustment of a metropolitan area transport network is divided into two levels: a bandwidth adjustment of a path layer (path) and a slot adjustment of a section layer (section), wherein messages exchanged between nodes include: 1) a custom OAM message for the path layer; 2) an OAM message for the section layer (consider reusing CR, CA and C bit messages in the FlexE overhead).
2. The bandwidth adjustment is specifically divided into two processes: bandwidth increase and bandwidth reduction; according to a direction of a data flow in the path, nodes can be divided into a source node, an intermediate node and a sink node; for a certain node, the next node to which data is transmitted is called a downstream node, the node from which the data comes is called an upstream node.

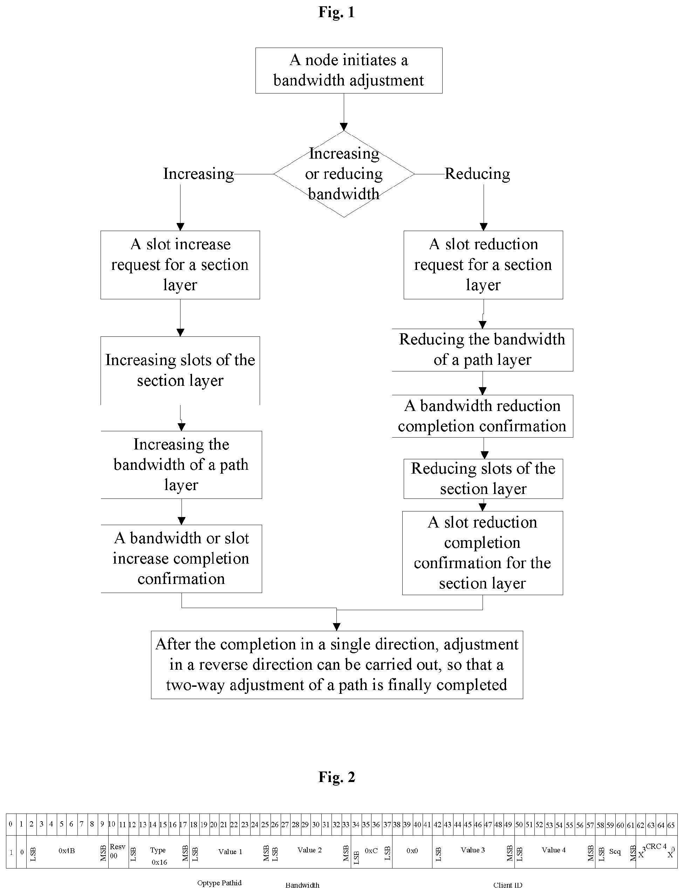

Fig. 1 is an overall flowchart of an exemplary bandwidth adjustment method according to an embodiment of the present disclosure. As shown in Fig. 1, the method includes the following operations.

When a node initiates a bandwidth adjustment, it can be understood that the bandwidth adjustment includes bandwidth increase and bandwidth reduction. Among the two types of bandwidth adjustment, for bandwidth increase, firstly, a slot increase request for a section layer is sent, then slots of the section layer are increased, after that, the bandwidth of the path layer is increased, and finally a bandwidth increase completion confirmation and a slot increase completion confirmation are sent. With the above messages, the bandwidth increase can be completed in a single direction, and adjustment in a reverse direction can also be carried out after the bandwidth increase in the single direction is completed, so that a two-way bandwidth increase adjustment of a path is finally completed.

Among the two types of bandwidth adjustment, for bandwidth reduction, firstly, a slot reduction request for a section layer is sent, then the bandwidth of a path layer is reduced, after that, a bandwidth increase completion confirmation is sent and slots of the section layer are reduced, and finally a slot reduction completion confirmation is sent. With the above messages, the bandwidth reduction can be completed in a single direction, and adjustment in a reverse direction can also be carried out after the bandwidth reduction in the single direction is completed, so that a two-way bandwidth reduction adjustment of a path is finally completed.

In order to more clearly explain the definition of the path layer notification message, the embodiments of the present disclosure also provide an explanation of the format of the path layer notification message. The notification message uses an idle field in OAM in a Slicing Packet Network (SPN) enterprise standard of China Mobile. The idle field is extended and defined. Fig. 2 is a schematic diagram of the format of the path layer notification message according to an embodiment of the present disclosure. The definition content is shown in Fig. 2 and will be explained in detail as follows.

### 1) Type

This field occupies 6 bits, and is in bit positions 12-17 of the OAM, which is the position of type. The value is 0x16, which represents a bandwidth adjustment notification message.

### 2) Operation type

This field occupies 4 bits, and is in bit positions 18-21 of the OAM, which is the position of value 1. The value is 0000-1111, defined as shown in Table 1 below:

**Table 1**

| | | |
|---|---|---|
| Slot increase request 0001 | Slot increase confirmation 0010 | Slot increase rejection 0011 |
| Slot reduction request 0100 | Slot reduction confirmation 0101 | Slot reduction rejection 0110 |
| Bandwidth increase completion 0111 | Bandwidth increase completion confirmation 1000 | |
| Bandwidth reduction completion 1001 | Bandwidth reduction complete confirmation 1010 | |
| Slot increase completion 1011 | Slot increase completion confirmation 1100 | |
| Slot reduction completion 1101 | Slot reduction completion confirmation 1110 | |

### 3) Path identifier

This field occupies 4 bits, and is in bit positions 22-25 of the OAM, which is the position of value 1. The value is 0000-1111, which represents that a maximum of 16 paths can be identified.

### 4) Bandwidth (granularity thereof is 5G)

This field occupies 8 bits, and is in bit positions 26-33 of the OAM, which is the position of value 2.

The value is 00000000-11111111, which represents that a maximum bandwidth of 255 5G slots can be increased.

### 5) Corresponding client ID

This field occupies 16 bits, and is in bit positions 42-57 of the OAM, which are the positions of value 3 and value 4.

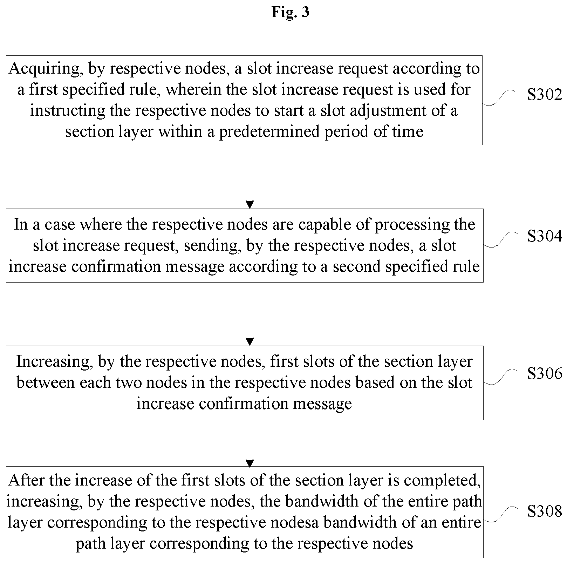

Fig. 3 is a flowchart of an exemplary bandwidth increasing method according to an embodiment of the present disclosure. As shown in Fig. 3, the method includes the following operations:
S302, acquiring, by respective nodes, a slot increase request according to a first specified rule, wherein the slot increase request is used for instructing the respective nodes to start a slot adjustment of a section layer within a predetermined period of time;
S304, in a case where the respective nodes are capable of processing the slot increase request, sending, by the respective nodes, a slot increase confirmation message according to a second specified rule;
S306, increasing, by the respective nodes, the first slots of the section layer between every two nodes in the respective nodes based on the slot increase confirmation message;
S308, after the increase of first slots of the section layer is completed, increasing, by the respective nodes, a bandwidth of an entire path layer corresponding to the respective nodes.

With the embodiments of the present disclosure, respective nodes acquire the slot increase request according to the first specified rule, wherein the slot increase request is used for instructing the respective nodes to start the slot adjustment of the section layer within the predetermined period of time; in a case where the respective nodes are capable of processing the slot increase request, the respective nodes send the slot increase confirmation message according to the second specified rule; respective nodes increase first slots of the section layer between every two nodes in the respective nodes based on the slot increase confirmation message; after the increase of the first slots of the section layer is completed, respective nodes increase a bandwidth of an entire path layer corresponding to the respective nodes. The technical solution solves the problem that in the metropolitan area transport network, the lossless adjustment of the bandwidth cannot be realized, and the bandwidth adjustment manner is not perfect in the related technology.

In the embodiments of the present disclosure, after acquiring, by the respective nodes, the slot increase request according to the first specified rule, at least one of the following technical means can be executed:
for each node in the respective nodes, in a case where the node is capable of processing the slot increase request and the node has a downstream node, sending the slot increase request to the downstream node;
in a case where a sink node in the respective nodes receives the slot increase request sent by an upstream node of the sink node, and the respective nodes are capable of processing the slot increase request, sending the slot increase confirmation message corresponding to the slot increase request to a first node, wherein the slot increase confirmation message is used for instructing a node that receives the slot increase confirmation message to perform a slot configuration, and the first node is the upstream node of the sink node;
in a case where a second node in the respective nodes does not allow processing the slot increase request, sending a slot increase rejection message corresponding to the slot increase request to an upstream node of the first node.

In the embodiments of the present disclosure, in a case where the sink node of the respective nodes receives the slot increase request sent by the upstream node of the sink node, and the respective nodes are capable of processing the slot increase request, after sending the slot increase confirmation message corresponding to the slot increase request to the first node, the method further includes: in a case where the first node has an upstream node, sending the slot increase confirmation message to a third node, so that the respective nodes receive the slot increase confirmation message, wherein the third node is the upstream node of the first node.

In the embodiments of the present disclosure, increasing, by the respective nodes, first slots of the section layer between every two nodes in the respective nodes based on the slot increase confirmation message includes: responding, by the respective nodes, to the slot increase confirmation message, and sending, by a source node in the respective nodes, a first section layer message to a fourth node, wherein in a case where the fourth node has a downstream node, the first section layer message is forwarded to the respective nodes so that the respective nodes acquire the first section layer message, and the fourth node is a downstream node of the source node; responding, by the respective nodes, to the first section layer message and increasing, by the respective nodes, the first slots of the section layer between every two nodes in the respective nodes based on the first section layer message.

In the embodiments of the present disclosure, increasing, by the respective nodes, the bandwidth of the entire path layer corresponding to the respective nodes includes: increasing the bandwidth of a source node in the respective nodes, so as to increase the bandwidth of the entire path layer corresponding to the respective nodes.

In the embodiments of the present disclosure, after increasing, by the respective nodes, the bandwidth of the entire path layer corresponding to the respective nodes after the increase of the first slots of the section layer is completed, the method further includes: sending, by the respective nodes, a slot increase completion message from a source node in the respective nodes, through one or more intermediate nodes in the respective nodes, to a sink node in the respective nodes, wherein the node sending the slot increase completion message represents that the node which sends the slot increase completion message has completed the increase of the slots; sending, by the respective nodes, a slot increase completion confirmation message from the sink node in the respective nodes, through the one or more intermediate nodes in the respective nodes, to the source node in the respective nodes, wherein the node receiving the slot increase completion confirmation message represents that the node which receives the slot increase completion confirmation message has determined that the node which sends the slot increase completion confirmation message has completed the increase of the slots.

In the embodiments of the present disclosure, after increasing, by the respective nodes, the bandwidth of the entire path layer corresponding to the respective nodes after the increase of the first slots of the section layer is completed, the method further includes: sending, by the respective nodes, a bandwidth increase completion message from a source node in the respective nodes, through one or more intermediate nodes in the respective nodes, to a sink node in the respective nodes, wherein the node sending the bandwidth increase completion message represents that the node which sends the bandwidth increase completion message has completed the increase of the bandwidth; sending, by the respective nodes, a bandwidth increase completion confirmation message from the sink node in the respective nodes, through the one or more intermediate nodes in the respective nodes, to the source node in the respective nodes, wherein the node receiving the bandwidth increase completion confirmation message represents that the node which receives the bandwidth increase completion confirmation message has determined that the node which sends the bandwidth increase completion confirmation message has completed the increase of the bandwidth.

The following explains the bandwidth increasing process with an example, but it is not used to limit the technical solutions of the embodiments of the present disclosure. The technical solutions of the examples of the present disclosure are as follows.

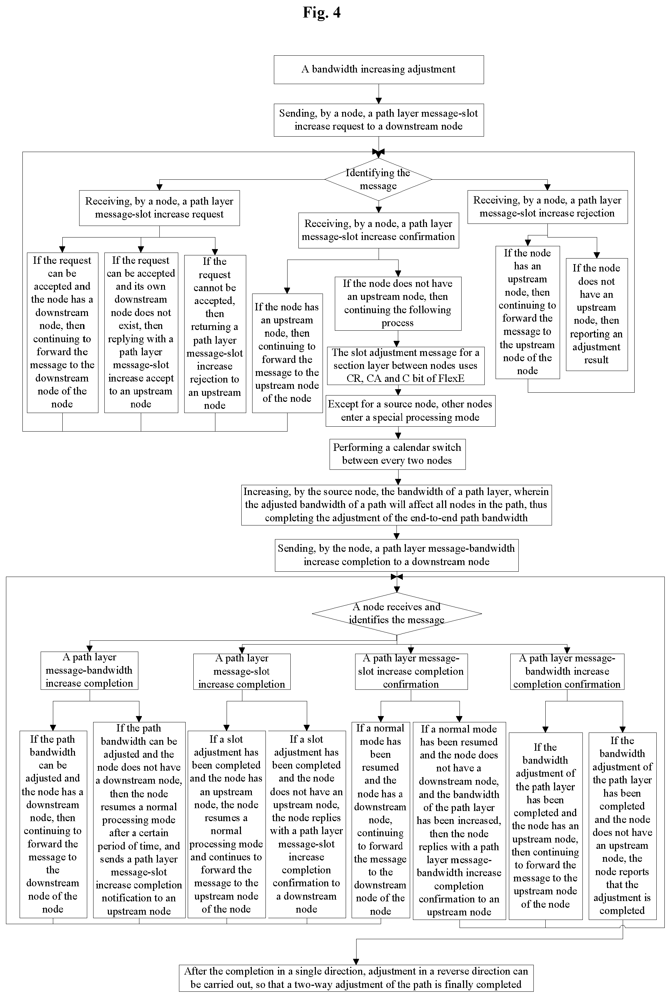

Fig. 4 is a flowchart of an exemplary bandwidth increasing process according to an embodiment of the present disclosure. As shown in Fig. 4, the process includes the following operations.
1) Requesting to increase slots of a section layer: a node sends a path layer message-slot increase request to a downstream node. The function of this message is to notify respective nodes that a slot adjustment of the section layer is about to start.

1. A node receives a path layer message-slot increase request, and the current node makes the following judgment.

If the request can be accepted and the node has a downstream node, then the node continues to forward the message to the downstream node of the node.

If the request can be accepted and the node does not have a downstream node, then the node replies with a path layer message-slot increase accept to an upstream node.

If the request cannot be accepted, then the node returns a path layer message-slot increase rejection to an upstream node.

2. A node receives a path layer message-slot increase confirmation, and the current node makes the following judgment.

If the node has an upstream node, then the node continues to forward the message to the upstream node of the node.

If the node does not have an upstream node, then the node continues the subsequent process.

3. A node receives a path layer message-slot increase rejection, and the current node makes the following judgment.

If the node has an upstream node, then the node continues to forward the message to the upstream node of the node.

If the node does not have an upstream node, then the node reports an adjustment result.

2) Completing a slot adjustment of the section layer: the function of this process is to adjust the slots of the section layer between every two nodes in the respective nodes.

A slot adjustment message for a section layer between nodes uses CR, CA and C bit of FlexE.

Except for a source node, other nodes enter a special processing mode.

A calendar switch is performed between every two nodes.

3) Completing a bandwidth adjustment of a path layer

The source node increases the bandwidth of a path layer, wherein the adjusted bandwidth of a path will affect all nodes in the path, thus completing the adjustment of the end-to-end path bandwidth.

4) Confirming the bandwidth and slot adjustment: a node sends a path layer message-bandwidth increase completion to a downstream node.
1. A node receives a path layer message-bandwidth increase completion, and the current node makes the following judgment.

If the path bandwidth can be adjusted and the node has a downstream node, then the node continues to forward the message to the downstream node of the node.

If the path bandwidth can be adjusted and the node does not have a downstream node, then the node resumes a normal processing mode after a certain period of time, and sends a path layer message-slot increase completion notification to an upstream node.

2. A node receives a path layer message-slot increase completion, and the current node makes the following judgment.

If a slot adjustment has been completed and the node has an upstream node, the node resumes a normal processing mode and continues to forward the message to the upstream node of the node.

If a slot adjustment has been completed and the node does not have an upstream node, the node replies with a path layer message-slot increase completion confirmation to a downstream node.

3. A node receives a path layer message-slot increase completion confirmation, and the current node makes the following judgment.

If a normal mode has been resumed and the node has a downstream node, then the node continues to forward the message to the downstream node of the node.

If a normal mode has been resumed and the node does not have a downstream node, and the bandwidth of the path layer has been increased, then the node replies with a path layer message-bandwidth increase completion confirmation to an upstream node.

4. A node receives a path layer message-bandwidth increase completion confirmation, and the current node makes the following judgment.

If the bandwidth adjustment of the path layer has been completed and the node has an upstream node, then the node continues to forward the message to the upstream node of the node.

If the bandwidth adjustment of the path layer has been completed and the node does not have an upstream node, the node reports that the adjustment is completed.

The following explains the above bandwidth increasing process with an exemplary embodiment, but it is not used to limit the technical solutions of the embodiments of the present disclosure. The technical solutions of the examples of the present disclosure are as follows.

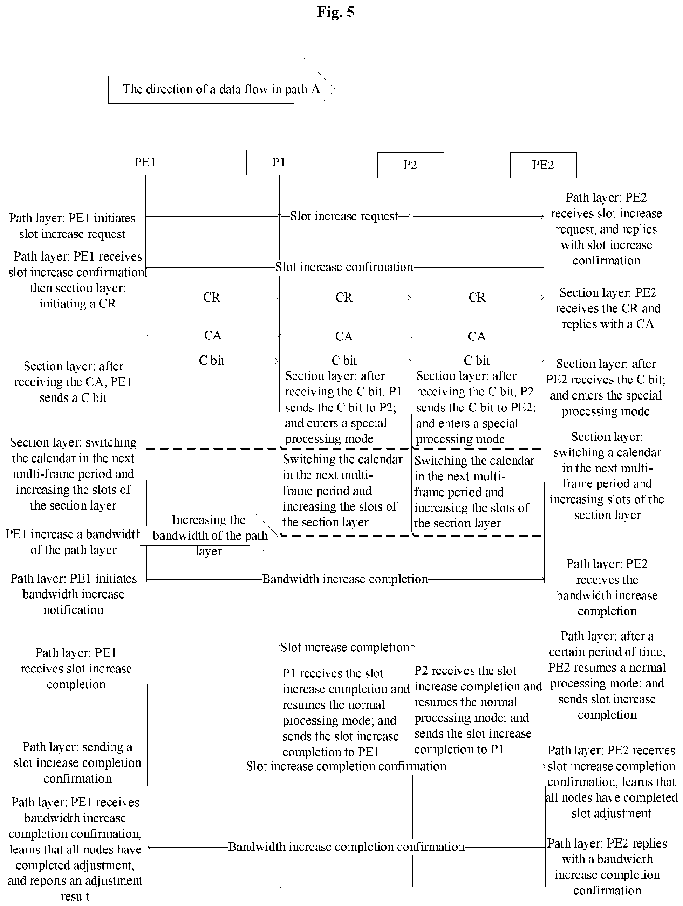

Fig. 5 is a flowchart of an exemplary successful bandwidth increasing process according to an embodiment of the present disclosure. As shown in Fig. 5, the process includes the following operations.

In the embodiment of the present disclosure, the bandwidth of path A is originally 10 Gb/s, and needs to be increased to 15 Gb/s, and the bandwidth is increased by 5 Gb/s. The path A is composed of nodes PE1, P1, P2, and PE2, and the direction of a data flow is from the source node PE1 to the sink node PE2. A client service carried is client A, and a client calendar A configuration is currently used, which occupies two 5G FlexE slots. The exemplary adjustment operations are as follows.

### 1. Requesting to increase slots of a section layer

In operation 1, the source node PE1 sends a path layer message "slot increase request" to the downstream node P1 (the request indicates "increase one 5G slot for path A", defined through pathid and bandwidth in the OAM format defined in Fig. 2), the P1 can increase slots and continue to send the path layer message "slot increase request" to the downstream node P2; the P2 receives the path layer message "slot increase request", and the P2 can increase slots and continue to send the path layer message "slot increase request" to the downstream node/sink node PE2.

In operation 2, the PE2 can increase the slots and send a path layer message "slot increase confirmation" to the upstream node P2; the P2 receives the path layer message "slot increase confirmation", and sends the path layer message "slot increase confirmation" to the upstream node P1; the P1 receives the path layer message "slot increase confirmation", and sends the path layer message "slot increase confirmation" to the upstream node PE1.

In operation 3, respective nodes that receives the path layer message "slot increase confirmation" prepares a client calendar B configuration for client A corresponding to the path A. Currently, the number of slots configured for the client A in the client calendar A is two 5G slots; the number of slots configured for the client A in the client calendar B is three 5G slots, and the bandwidth is 15Gb/s.

### 2. Completing a slot adjustment of a section layer and a bandwidth adjustment of a path layer

In operation 1, the PE1 receives the path layer message "slot increase confirmation", and sends a section layer message CR to the downstream node P1; after receiving the CR, the P1 sends the section layer message CR to the downstream node P2, and after receiving the CR, the P1 sends the section layer message CR to the downstream node PE2.

In operation 2, the PE2 receives the section layer message CR and replies with a section layer message CA to the P2; the P2 receives the CA and replies with the section layer message CA to the P1; the P1 receives the CA and replies with the section layer message CA to the PE1.

In operation 3, the PE1 receives the section layer message CA and replies with a section layer message C bit to the P1; the P1 receives the C bit and replies with the section layer message C bit to the P2; the P2 receives the C bit and replies with the section layer message C bit to the PE2; the P1, P2 and PE2 enter a special processing mode.

In operation 4, in the following calendar switching, the operations of a total of three pairs of node are involved. It is possible for any pair to switch firstly.
1) The PE1 and P1 switch from the client calendar A to the client calendar B in the next multi-frame period to complete the point-to-point bandwidth adjustment of the section layer; the PE1 increases the bandwidth of the path layer (using idle at a source MAC/RS layer to increase the bandwidth of the client A).
2) The P1 and P2 switch from the client calendar A to the client calendar B in the next multi-frame period to complete the point-to-point bandwidth adjustment.
3) The P2 and PE2 switch from the client calendar A to the client calendar B in the next multi-frame period to complete the point-to-point bandwidth adjustment.

It should be noted that the recording time when the PE2 receives the section layer message C bit is t1 from the start of the current multi-frame, and t2 from the start of the next multi-frame, that is, t1+t2 = one multi-frame period of time.

### 3. Confirming the bandwidth and slot adjustment

In operation 1, the source PE1 sends a path layer message "bandwidth increase completion" to the downstream node P1, and the P1 receives the "bandwidth increase completion" and can increase the bandwidth, and sends the "bandwidth increase completion" to the downstream node P2; the P2 receives the "bandwidth increase completion" and can increase the bandwidth, and sends the "bandwidth increase completion" to the downstream/sink node PE2.

In operation 2, the sink node PE2 receives the "bandwidth increase completion"; at the same time, after the time of t1 has elapsed (the purpose is to ensure that all nodes of the path have experienced a multi-frame period of time) since completing the calendar switching (that is, after t2), the PE2 resumes to a normal processing mode, and sends a path layer message "slot increase completion" to the upstream node P2; after receiving the path layer message "slot increase completion", the P2 resumes the normal processing mode, and continues to send the path layer message "slot increase completion" to the upstream node P1; the P1 receives the path layer message "slot increase completion", resumes the normal processing mode, and continues to send the path layer message "slot increase completion" to the upstream node/source PE1.

In operation 3, the source PE1 receives the path layer message "slot increase completion", and sends a path layer message "slot increase completion confirmation" to the downstream node P1; the P1 receives the "slot increase completion confirmation" and sends the "slot increase completion confirmation" to the downstream node P2; the P2 receives the "slot increase completion confirmation" and sends the "slot increase completion confirmation" to the downstream/sink node PE2.

In operation 4, the sink node PE2 receives the path layer message "slot increase completion confirmation" and has completed the increase of the bandwidth, and sends a path layer message "bandwidth increase completion confirmation" to the upstream node P2; the P2 receives the "bandwidth increase completion confirmation" and has completed the increase of the bandwidth, sends the "bandwidth increase completion confirmation" to the upstream node P1; the P1 receives the "bandwidth increase completion confirmation" and has completed the increase of the bandwidth, and sends the "bandwidth increase completion confirmation" to the upstream/source node PE1.

In operation 5, the PE1 receives the "bandwidth increase completion confirmation", learns that all nodes have completed the adjustment, and reports an adjustment result.

### 4. Reverse adjustment phase

According to the above operations, adjustment can be performed in a reverse direction of increasing the path bandwidth.

The following explains the above failed bandwidth increasing process with an example, but it is not used to limit the technical solutions of the embodiments of the present disclosure. The technical solutions of the examples of the present disclosure are as follows.

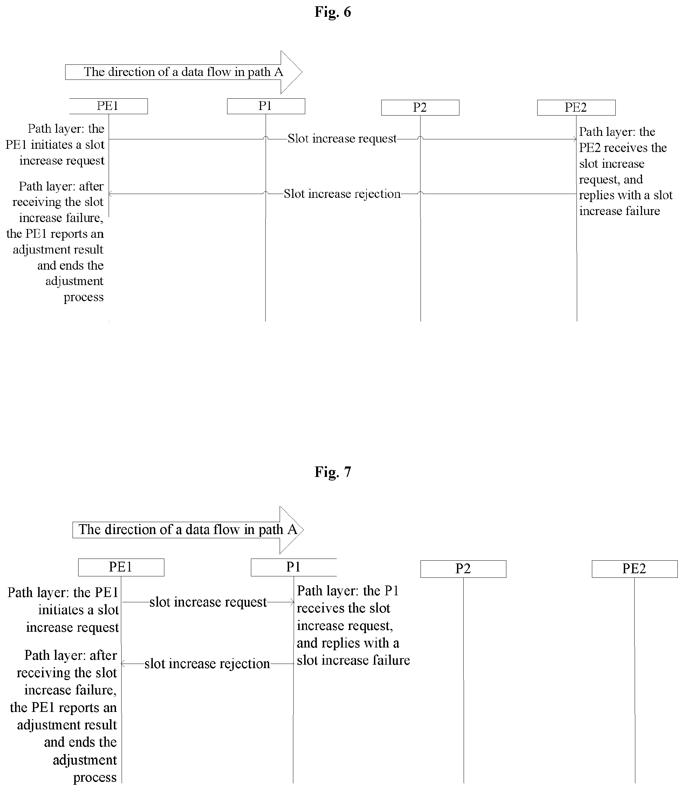

Fig. 6 is a flowchart of an exemplary failed bandwidth increasing process according to an embodiment of the present disclosure. As shown in Fig. 6, the process includes the following operations.

In this embodiment, the bandwidth of a path A is originally 10 Gb/s, and needs to be increased to 15 Gb/s, and the bandwidth is increased by 5 Gb/s. The path A is composed of nodes PE1, P1, P2, and PE2, and the direction of a data flow is from the source node PE1 to the sink node PE2. A client service carried is client A, and a client calendar A configuration is currently used, which occupies two 5G FlexE slots. The exemplary adjustment operations are as follows.

In operation 1, the source node PE1 sends a path layer message "slot increase request" to the downstream node P1 (the request indicates "increase one 5G slot for path A", defined through pathid and bandwidth in the OAM format defined in embodiment 1), and the P1 can increase slots and continue to send the path layer message "slot increase request" to the downstream node P2; the P2 receives the "slot increase request", and the P2 can increase slots and continue to send the path layer message "slot increase request" to the downstream node/sink node PE2.

In operation 2, the PE2 cannot increase the slots and send a path layer message "slot increase rejection" to the upstream node P2; the P2 receives the "slot increase rejection", and sends the path layer message "slot increase rejection" to the upstream node P1; the P1 receives the "slot increase rejection", and sends the path layer message "slot increase rejection" to the upstream node PE1.

In operation 3, the PE1 receives the path layer message "slot increase rejection", reports an adjustment result and ends the adjustment process.

Fig. 7 is a flowchart of an exemplary failed bandwidth increasing process according to an embodiment of the present disclosure. As shown in Fig. 7, the process includes the following operations.

In this embodiment, the bandwidth of a path A is originally 10 Gb/s, and needs to be increased to 15 Gb/s, and the bandwidth is increased by 5 Gb/s. The path A is composed of nodes PE1, P1, P2, and PE2, and the direction of a data flow is from the source PE1 to the sink node PE2. A client service carried is client A, and a client calendar A configuration is currently used, which occupies two 5G FlexE slots. The exemplary adjustment operations are as follows.

In operation 1, the source node PE1 sends a path layer message "slot increase request" to the downstream node P1 (the request indicates "increase one 5G slot for path A", defined through pathid and bandwidth in the OAM format defined in embodiment 1), and the P1 cannot increase slots and continue to send a path layer message "slot increase rejection" to the upstream node PE1.

In operation 2, the PE1 receives the path layer message "slot increase rejection", reports an adjustment result and ends the adjustment process.

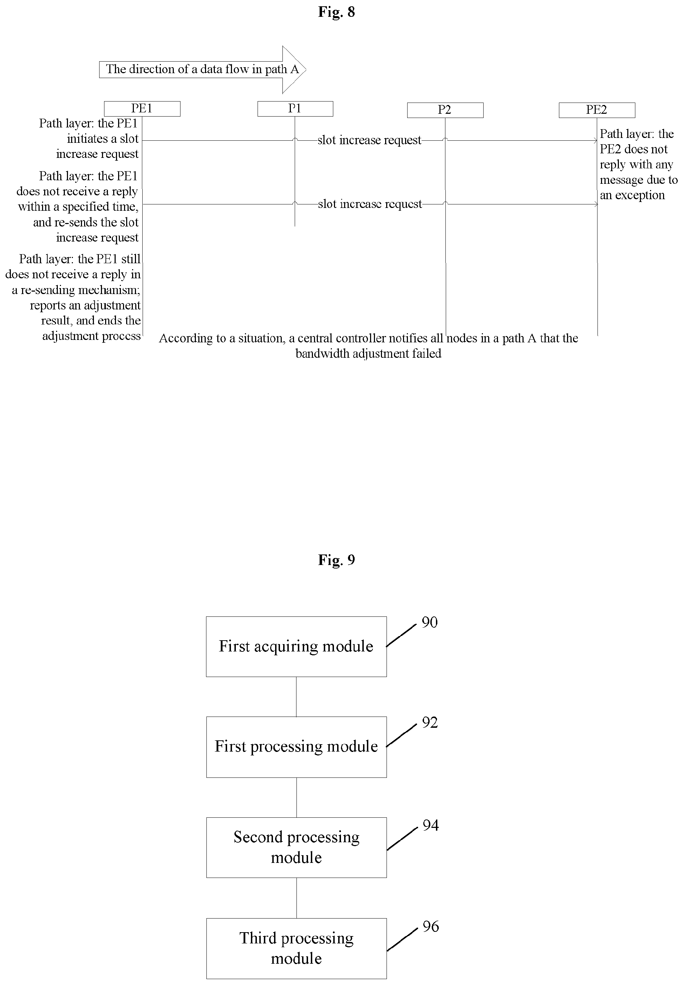

Fig. 8 is a further flowchart of an exemplary failed bandwidth increasing process according to an embodiment of the present disclosure. As shown in Fig. 8, the process includes the following operations.

In this embodiment, the bandwidth of a path A is originally 10 Gb/s, and needs to be increased to 15 Gb/s, and the bandwidth is increased by 5 Gb/s. The path A is composed of nodes PE1, P1, P2, and PE2, and the direction of a data flow is from the source PE1 to the sink node PE2. A client service carried is client A, and a client calendar A configuration is currently used, which occupies two 5G FlexE slots. The exemplary adjustment operations are as follows.

In operation 1, the source node PE1 sends a path layer message "slot increase request" to the downstream node P1 (the request indicates " increase one 5G slot for path A", defined through pathid and bandwidth in the OAM format defined in embodiment 1), and the P1 can increase slots and continue to send the path layer message "slot increase request" to the downstream node P2; the P2 receives the "slot increase request", and the P2 can increase slots and continue to send the path layer message "slot increase request" to the downstream node/sink node PE2.

In operation 2: the PE2 does not reply with any message due to an exception.

In operation 3: the PE1 does not receive a reply within a specified time, and re-sends the path layer message "slot increase request".

In operation 4: the PE1 does not receive a reply in the specified time in a re-sending mechanism, reports an adjustment result, and ends the adjustment process.

In operation 5, according to a situation, a central controller notifies all nodes in a path A that the bandwidth adjustment failed.

It can be understood that, in the exemplary implementation process of the above embodiments of the present disclosure, the number of increased or deleted slots, the number of increased or deleted bandwidths, the number of increased or deleted services, and other easily conceivable transformations are not limited in the embodiments of the present disclosure, but should be included in the protection scope of the present disclosure.

Through the description of the above implementations, those having ordinary skill in the art can clearly understand that the method according to the above embodiments can be implemented by means of software plus a necessary general hardware platform. Of course, it can also be implemented by hardware, but in many cases the former is a better implementation. Based on such understanding, the technical solution of the present disclosure essentially or the part that contributes to the prior art can be embodied in the form of a software product, and the computer software product is stored in a storage medium (such as a ROM/RAM, a magnetic disk, an optical disc), and includes several instructions to enable a terminal device (which can be a mobile phone, a computer, a server, or a network device, etc.) to execute the method described in individual embodiments of the present disclosure.

In this embodiment, a bandwidth increasing device is also provided, which is used to implement the above embodiments and exemplary implementations, and those that have been described will not be repeated. As used below, the term "module" may implement a combination of software and/or hardware with predetermined functions. The apparatus described in the following embodiments are preferably implemented by the software, but the hardware or a combination of the software and hardware is also possible and conceived.

Fig. 9 is a structure diagram of an exemplary bandwidth increasing apparatus according to an embodiment of the present disclosure. As shown in Fig. 9, the apparatus is applied to respective nodes in a metropolitan area transport network. The apparatus includes:
a first acquiring module 90, configured to acquire a slot increase request according to a first specified rule, wherein the slot increase request is used for instructing the respective nodes to start a slot adjustment of a section layer within a predetermined period of time;
a first processing module 92, configured to send, by the respective nodes, a slot increase confirmation message according to a second specified rule in a case where the respective nodes are capable of processing the slot increase request;
a second processing module 94, configured to increase first slots of the section layer between every two nodes in the respective nodes based on the slot increase confirmation message;
a third processing module 96, configured to increase, by the respective nodes, a bandwidth of an entire path layer corresponding to the respective nodes after the increase of the first slots of the section layer is completed.

With the embodiments of the present disclosure, respective nodes acquire the slot increase request according to the first specified rule, wherein the slot increase request is used for instructing the respective nodes to start the slot adjustment of the section layer within the predetermined period of time; in a case where the respective nodes are capable of processing the slot increase request, the respective nodes send the slot increase confirmation message according to the second specified rule; respective nodes increase first slots of the section layer between every two nodes in the respective nodes based on the slot increase confirmation message; after the increase of the first slots of the section layer is completed, respective nodes increase a bandwidth of an entire path layer corresponding to the respective nodes. The technical solution solves the problem that in the metropolitan area transport network, the lossless adjustment of the bandwidth cannot be realized, and the bandwidth adjustment manner is not perfect in the related technology.

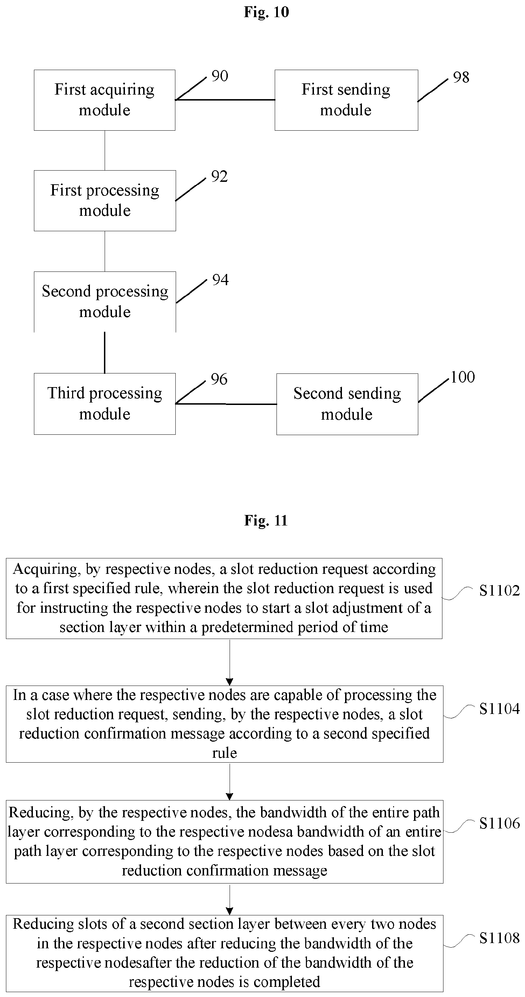

In the embodiments of the present disclosure, Fig. 10 is another structure diagram of an exemplary bandwidth increasing apparatus according to an embodiment of the present disclosure. As shown in Fig. 10, the apparatus includes at least one of the followings:
a first sending module 98, configured to send, by each node in the respective nodes, the slot increase request to the downstream node in a case where the node is capable of processing the slot increase request and the node has a downstream node;
the first sending module 98 is further configured to send the slot increase confirmation message corresponding to the slot increase request to a first node in a case where a sink node in the respective nodes receives the slot increase request sent by an upstream node of the sink node, and the respective nodes are capable of processing the slot increase request, wherein the slot increase confirmation message is used for instructing a node that receives the slot increase confirmation message to perform a slot configuration, and the first node is the upstream node of the sink node;
the first sending module 98 is further configured to send a slot increase rejection message corresponding to the slot increase request to an upstream node of the first node in a case where a second node in the respective nodes does not allow processing the slot increase request.

In the embodiment of the present disclosure, as shown in Fig. 10, the apparatus further includes: the first sending module 98, further configured to send the slot increase confirmation message to a third node in a case where the first node has an upstream node, so that the respective nodes receive the slot increase confirmation message, wherein the third node is the upstream node of the first node.

In the embodiment of the present disclosure, as shown in Fig. 9, the second processing module 94 is further configured to respond, by the respective nodes, to the slot increase confirmation message, and send, by a source node in the respective nodes, a first section layer message to a fourth node, wherein in a case where the fourth node has a downstream node, the first section layer message is forwarded to the respective nodes so that the respective nodes acquire the first section layer message, and the fourth node is a downstream node of the source node; respond, by the respective nodes, to the first section layer message and increase, by the respective nodes, the first slots of the section layer between every two nodes in the respective nodes based on the first section layer message.

In the embodiment of the present disclosure, as shown in Fig. 9, the third processing module 96 is further configured to increase the bandwidth of a source node in the respective nodes, so as to increase a bandwidth of an entire path layer corresponding to the respective nodes.

In the embodiment of the present disclosure, as shown in Fig. 10, the apparatus further includes:
a second sending module 100, configured to send, by the respective nodes, a slot increase completion message from a source node in the respective nodes, through one or more intermediate nodes in the respective nodes, to a sink node in the respective nodes, wherein the node sending the slot increase completion message represents that the node which sends the slot increase completion message has completed the increase of the slots;
the second sending module 100 is further configured to send, by the respective nodes, a slot increase completion confirmation message from the sink node in the respective nodes, through the one or more intermediate nodes in the respective nodes, to the source node in the respective nodes, wherein the node receiving the slot increase completion confirmation message represents that the node which receives the slot increase completion confirmation message has determined that the node which sends the slot increase completion confirmation message has completed the increase of the slots.

In the embodiment of the present disclosure, as shown in Fig. 10, the second sending module 100 is further configured to send, by the respective nodes, a bandwidth increase completion message from a source node in the respective nodes, through one or more intermediate nodes in the respective nodes, to a sink node in the respective nodes, wherein the node sending the bandwidth increase completion message represents that the node which sends the bandwidth increase completion message has completed the increase of the bandwidth;

The second sending module 100 is further configured to send, by the respective nodes, a bandwidth increase completion confirmation message from the sink node in the respective nodes, through the one or more intermediate nodes in the respective nodes, to the source node in the respective nodes, wherein the node receiving the bandwidth increase completion confirmation message represents that the node which receives the bandwidth increase completion confirmation message has determined that the node which sends the bandwidth increase completion confirmation message has completed the increase of the bandwidth.

In the embodiment of the present disclosure, there is also provided a storage medium including a stored program, wherein the method described in any one of the above is carried out when the program is executed.

As an exemplary implementation of this embodiment, the above storage medium may be configured to store program codes for executing the following operations:
S1, acquiring, by respective nodes, a slot increase request according to a first specified rule, wherein the slot increase request is used for instructing the respective nodes to start a slot adjustment of a section layer within a predetermined period of time;
S2, in a case where the respective nodes are capable of processing the slot increase request, sending, by the respective nodes, a slot increase confirmation message according to a second specified rule;
S3, increasing, by the respective nodes, first slots of the section layer between every two nodes in the respective nodes based on the slot increase confirmation message;
S4, after the increase of the first slots of the section layer is completed, increasing, by the respective nodes, a bandwidth of an entire path layer corresponding to the respective nodes.

As an exemplary implementation of this embodiment, the above storage medium may include, but is not limited to: various media that can store program codes, such as a U disk, a Read-Only Memory (ROM), a Random Access Memory (RAM), a mobile hard disk, a magnetic disk, or an optical disk.

In the embodiment of the present disclosure, there is also provided an electronic apparatus including a memory and a processor, wherein a computer program is stored in the memory, and the processor is configured to execute the computer program so as to carry out the operations of any one of the above method embodiments.

As an exemplary implementation of this embodiment, the above electronic apparatus may further include a transmission device and an input-output device, wherein the transmission device is connected to the above processor, and the input-output device is connected to the above processor.

As an exemplary implementation of this embodiment, the above processor may be configured to perform the following operations through the computer program:
S1, acquiring, by respective nodes, a slot increase request according to a first specified rule, wherein the slot increase request is used for instructing the respective nodes to start a slot adjustment of a section layer within a predetermined period of time;
S2, in a case where the respective nodes are capable of processing the slot increase request, sending, by the respective nodes, a slot increase confirmation message according to a second specified rule;
S3, increasing, by the respective nodes, first slots of the section layer between every two nodes in the respective nodes based on the slot increase confirmation message;
S4, after the increase of the first slots of the section layer is completed, increasing, by the respective nodes, a bandwidth of an entire path layer corresponding to the respective nodes.

For specific examples in this embodiment, reference may be made to the examples described in the above embodiments and exemplary implementations, and details are not described herein again in this embodiment.

Fig. 11 is a flowchart of an exemplary bandwidth reducing method according to an embodiment of the present disclosure. As shown in Fig. 11, the method includes the following operations:
S1102, acquiring, by respective nodes, a slot reduction request according to a first specified rule, wherein the slot reduction request is used for instructing the respective nodes to start a slot adjustment of a section layer within a predetermined period of time;
S1104, in a case where the respective nodes are capable of processing the slot reduction request, sending, by the respective nodes, a slot reduction confirmation message according to a second specified rule;
S1106, reducing, by the respective nodes, a bandwidth of an entire path layer corresponding to the respective nodes based on the slot reduction confirmation message;
S1108, reducing second slots of the section layer between every two nodes in the respective nodes after the reduction of the bandwidth of the respective nodes is completed.

With the embodiments of the present disclosure, the respective nodes acquire the slot reduction request according to the first specified rule, wherein the slot reduction confirmation message is used for instructing the respective nodes to start the slot adjustment of a section layer within the predetermined period of time; in a case where the respective nodes are capable of processing the slot reduction request, the respective nodes send the slot reduction confirmation message according to the second specified rule; the respective nodes reduce a bandwidth of an entire path layer corresponding to the respective nodes based on the slot reduction confirmation message, and reduce the second slots of the section layer between every two nodes in the respective nodes after the reduction of the bandwidth of the respective nodes is completed. The technical solution solves the problem that in the metropolitan area transport network, the lossless adjustment of the bandwidth cannot be realized, and the bandwidth adjustment manner is not perfect in the related technology.

In the embodiment of the present disclosure, after acquiring, by the respective nodes, the slot reduction request according to the first specified rule, the method further includes at least one of the followings:
for each node in the respective nodes, in a case where the node is capable of processing the slot reduction request and the node has a downstream node, sending the slot reduction request to the downstream node;
in a case where a sink node in the respective nodes receives the slot reduction request sent by an upstream node of the sink node, and the respective nodes are capable of processing the slot reduction request, sending the slot reduction confirmation message corresponding to the slot reduction request to a fifth node, wherein the slot reduction confirmation message is used for instructing a node that receives the slot reduction confirmation message to perform a slot configuration, and the fifth node is the upstream node of the sink node;
in a case where a sixth node in the respective nodes does not allow processing the slot reduction request, sending a slot reduction rejection message corresponding to the slot reduction request to an upstream node of the fifth node.

In the embodiment of the present disclosure, in a case where the sink node in the respective nodes receives the slot reduction request sent by the upstream node of the sink node, and the respective nodes are capable of processing the slot reduction request, after sending the slot reduction confirmation message corresponding to the slot reduction request to the fifth node, the method further includes:
in a case where the fifth node has an upstream node, sending the slot reduction confirmation message to a seventh node, so that the respective nodes receive the slot reduction confirmation message, wherein the seventh node is the upstream node of the fifth node.

In the embodiment of the present disclosure, reducing, by the respective nodes, the bandwidth of the entire path layer corresponding to the respective nodes based on the slot reduction confirmation message includes:
reducing, by a source node in the respective nodes, the bandwidth of the entire path layer corresponding to the respective nodes based on the slot reduction confirmation message, so as to reduce the bandwidth of nodes other than the source node.

In the embodiment of the present disclosure, reducing, by the respective nodes, the second slots of the section layer between every two nodes in the respective nodes based on the slot reduction confirmation message includes:
responding, by the respective nodes, to the slot reduction confirmation message, and sending, by a source node in the respective nodes, a second section layer message to an eighth node, wherein in a case where the eighth node has a downstream node, the second section layer message is forwarded to the respective nodes so that the respective nodes acquire the second section layer message, and the eighth node is a downstream node of the source node;
responding to the second section layer message and reducing the second slots of the section layer between every two nodes in the respective nodes based on the second section layer message by the respective nodes.

In the embodiment of the present disclosure, after reducing, by the respective nodes, the bandwidth of the entire path layer corresponding to the respective nodes after the reduction of the second slots of the section layer is completed, the method further includes:
sending, by the respective nodes, a slot reduction completion message from a source node in the respective nodes, through one or more intermediate nodes in the respective nodes, to a sink node in the respective nodes, wherein the node sending the slot reduction completion message represents that the node which sends the slot reduction completion message has completed the reduction of the slots;
sending, by the respective nodes, a slot reduction completion confirmation message from the sink node in the respective nodes, through the one or more intermediate nodes in the respective nodes, to the source node in the respective nodes, wherein the node receiving the slot reduction completion confirmation message represents that the node which receives the slot reduction completion confirmation message has determined that the node which sends the slot reduction completion confirmation message has completed the reduction of the slots.

In the embodiment of the present disclosure, after reducing, by the respective nodes, the bandwidth of the entire path layer corresponding to the respective nodes after the reduction of the second slots of the section layer is completed, the method further includes:
sending, by the respective nodes, a bandwidth reduction completion message from a source node in the respective nodes, through one or more intermediate nodes in the respective nodes, to a sink node in the respective nodes, wherein the node sending the bandwidth reduction completion message represents that the node which sends the bandwidth reduction completion message has completed the reduction of the bandwidth;
sending, by the respective nodes, a bandwidth reduction completion confirmation message from the sink node in the respective nodes, through the one or more intermediate nodes in the respective nodes, to the source node in the respective nodes, wherein the node receiving the bandwidth reduction completion confirmation message represents that the node which receives the bandwidth reduction completion confirmation message has determined that the node which sends the bandwidth reduction completion confirmation message has completed the reduction of the bandwidth.

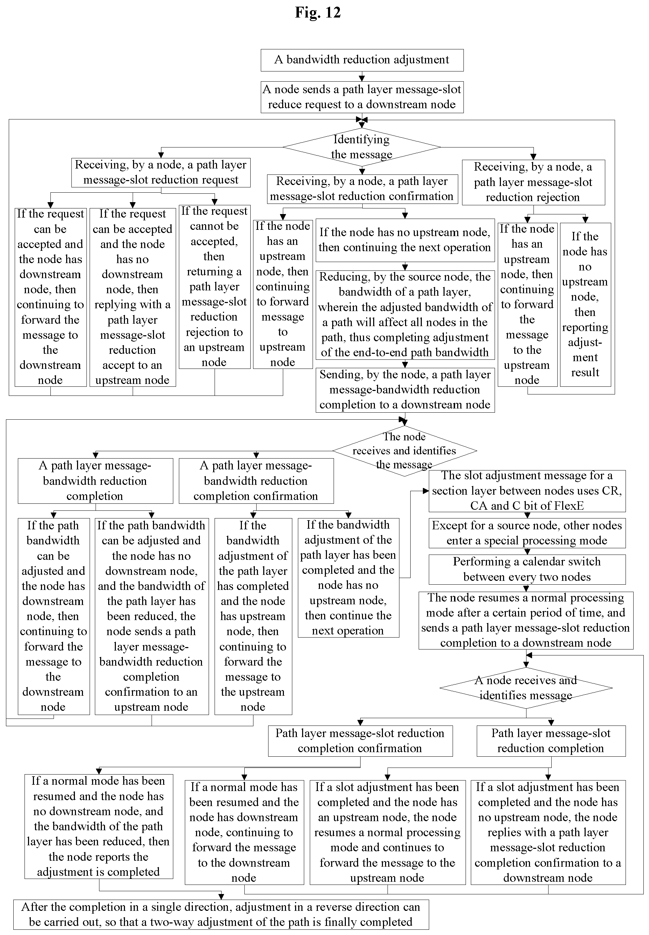

Fig. 12 is a flowchart of an exemplary bandwidth reducing process according to an embodiment of the present disclosure. As shown in Fig. 12, the process includes the following operations.
1) Requesting to reducing slots of a section layer: a node sends a path layer message-slot reduction request to a downstream node, wherein the function of the message is to notify respective nodes that a slot adjustment of the section layer is about to start.

1. A node receives a path layer message-slot reduction request, and the current node makes the following judgment.

If the request can be accepted and the node has a downstream node, then the node continues to forward the message to the downstream node of the node.

If the request can be accepted and the node does not have a downstream node, then the node replies with a path layer message-slot reduction accept to an upstream node.

If the request cannot be accepted, then the node returns a path layer message-slot reduction rejection to an upstream node.

2. A node receives a path layer message-slot reduction confirmation, and the current node makes the following judgment.

If the node has an upstream node, then the node continues to forward the message to the upstream node of the node.

If the node does not have an upstream node, then the node continues the subsequent process.

3. A node receives a path layer message-slot reduction rejection, and the current node makes the following judgment.

If the node has an upstream node, then the node continues to forward the message to the upstream node of the node.

If the node does not have an upstream node, then the node reports an adjustment result.

### 2) Completing a bandwidth adjustment of a path layer

The source node reduces the bandwidth of a path layer, wherein the adjusted bandwidth of a path will affect all nodes in the path, thus completing the adjustment of the end-to-end path bandwidth.

1. The node sends a path layer message-bandwidth reduction completion to a downstream node, and the downstream node makes the following judgment.

If the path bandwidth can be adjusted and the node has a downstream node, then the node continues to forward the message to the downstream node of the node.

If the path bandwidth can be adjusted and the node does not have a downstream node, and the bandwidth of the path layer has been reduced, the node sends a path layer message-bandwidth reduction completion confirmation to an upstream node.

2. A node receives a path layer message-bandwidth reduction completion confirmation, and the current node makes the following judgment.

If the bandwidth adjustment of the path layer has been completed and the node has an upstream node, then the node continues to forward the message to the upstream node of the node.

If the bandwidth adjustment of the path layer has been completed and the node does not have an upstream node, then continue the next operation.

3) Completing a slot adjustment of the section layer: the function of this process is to adjust the slots of the section layer between every two nodes in the respective nodes.

A slot adjustment message for a section layer between nodes uses CR, CA and C bit of FlexE.

Except for a source node, other nodes enter a special processing mode.

A calendar switch is performed between every two nodes.

### 4) Confirming the slot adjustment

The node resumes a normal processing mode after a certain period of time, and sends a path layer message-slot reduction completion to an upstream node.

1. A node receives a path layer message-slot reduction completion, and the current node makes the following judgment.

If a slot adjustment has been completed and the node has an upstream node, the node resumes a normal processing mode and continues to forward the message to the upstream node of the node.

If a slot adjustment has been completed and the node does not have an upstream node, the node replies with a path layer message-slot reduction completion confirmation to a downstream node.

2. A node receives a path layer message-slot reduction completion confirmation, and the current node makes the following judgment.

If a normal mode has been resumed and the node has a downstream node, then the node continues to forward the message to the downstream node of the node.

If a normal mode has been resumed and the node does not have a downstream node, and the bandwidth of the path layer has been increased, then the node reports that the adjustment is completed.

5) After the completion in a single direction, adjustment in a reverse direction can be carried out, so that a two-way adjustment of the path is finally completed.

6) For the message sent by the node, if there is no reply within a specified time, whether to use a re-sending mechanism can be selected; if the re-sending mechanism is used and no reply is received, the node terminates the adjustment operation and resumes an initial state.

The following explains the above bandwidth reducing process with an exemplary embodiment, but it is not used to limit the technical solutions of the embodiments of the present disclosure. The technical solutions of the examples of the present disclosure are as follows.

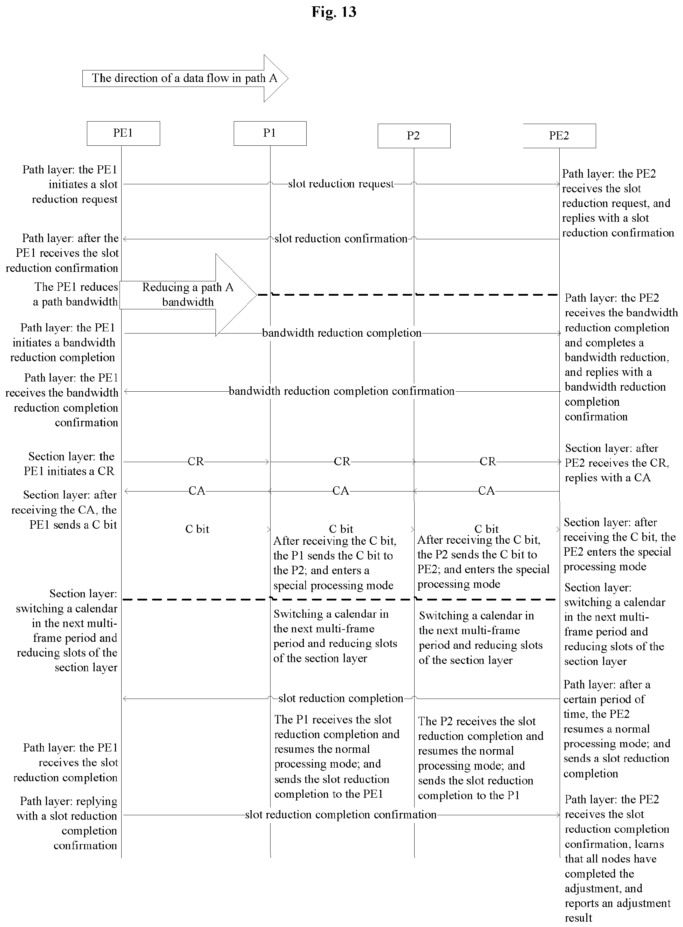

Fig. 13 is a flowchart of an exemplary successful bandwidth reducing process according to an embodiment of the present disclosure. As shown in Fig. 13, the process includes the following operations.

In this embodiment, the bandwidth of a path A is originally 15 Gb/s, and needs to be reduced to 10 Gb/s, and the bandwidth is reduced by 5 Gb/s. The path A is composed of nodes PE1, P1, P2, and PE2, and the direction of a data flow is from the source PE1 to the sink node PE2. A client service carried is client A, and a client calendar A configuration is currently used, which occupies three 5G FlexE slots. The exemplary adjustment operations are as follows.

### 1. Performing a slot reduction adjustment of a section layer

In operation 1, the source node PE1 sends a path layer "slot reduction request" to the downstream node P1 (the request indicates "reducing one 5G slot for the path A", defined through pathid and bandwidth in the OAM format defined in Fig. 2), the P1 can reduce slots and continue to send the "slot reduction request" to the downstream node P2; the P2 receives the path layer "slot reduction request", and the P2 can reduce slots and continue to send the path layer "slot reduction request" to the downstream node/sink node PE2.

In operation 2, the PE2 can reduce slots and send a path layer "slot reduction confirmation" to the upstream node P2; the P2 receives the "slot reduction confirmation", and sends the path layer "slot reduction confirmation" to the upstream node P1; the P1 receives the "slot reduction confirmation", and sends the path layer "slot reduction confirmation" to the upstream node PE1.

In operation 3, respective nodes that receives the path layer "slot reduction confirmation" prepares a client calendar B configuration for client A corresponding to the path A. Currently, the number of slots configured for the client A in the client calendar A is three 5G slots; the number of slots configured for the client A in the client calendar B is two 5G slots, and the bandwidth is 10Gb/s.

### 2. Completing a bandwidth adjustment of a path layer

In operation 1, the PE1 reduces the path layer bandwidth (reducing the bandwidth of client A).

In operation 2, the source PE1 sends a path layer message "bandwidth reduction completion" to the downstream node P1, the P1 receives the "bandwidth reduction completion" and can reduce the bandwidth, and sends the "bandwidth reduction completion" to the downstream node P2; the P2 receives "bandwidth reduction completion" and can reduce the bandwidth, and sends the "bandwidth reduction completion" to the downstream/sink node PE2.

In operation 3, the sink node PE2 receives the path layer message "bandwidth reduction completion" and has completed the reduction of the bandwidth, and sends a path layer message "bandwidth reduction completion confirmation" to the upstream node P2; the P2 receives the "bandwidth reduction completion confirmation" and has completed the reduction of the bandwidth, sends the "bandwidth reduction completion confirmation" to the upstream node P1; the P1 receives the "bandwidth reduction completion confirmation" and has completed the reduction of the bandwidth, and sends the "bandwidth reduction completion confirmation" to the upstream/source node PE1.

### 3. Completing the slot adjustment of the section layer

In operation 1, the PE1 receives the path layer "bandwidth reduction confirmation", and sends a section layer message CR to the downstream node P1; after receiving the CR, the P1 sends the section layer message CR to the downstream node P2, and after receiving the CR, the P1 sends the section layer message CR to the downstream node PE2.

In operation 2, the PE2 receives the section layer message CR and replies with a section layer message CA to the P2; the P2 receives the CA and replies with the section layer message CA to the P1; the P1 receives the CA and replies with the section layer message CA to the PE1.

In operation 3, the PE1 receives the section layer message CA and replies with a section layer message C bit to the P1; the P1 receives the C bit and replies with the section layer message C bit to the P2; the P2 receives the C bit and replies with the section layer message C bit to the PE2; the P1, P2 and PE2 enter a special processing mode.

In operation 4, the PE1 and P1 switch from the client calendar A to the client calendar B in the next multi-frame period to complete the point-to-point bandwidth adjustment of the section layer; the P1 and P2 switch from the client calendar A to the client calendar B in the next multi-frame period to complete the point-to-point bandwidth adjustment of the section layer; the P2 and PE2 switch from the client calendar A to the client calendar B in the next multi-frame period to complete the point-to-point bandwidth adjustment of the section layer.

It should be noted that the recording time when the PE2 receives the section layer message C bit is t1 from the start of the current multi-frame, and t2 from the start of the next multi-frame.

### 4. Confirming a slot adjustment result

In operation 1, after the time of t1 has elapsed (the purpose is to ensure that all nodes of the path have experienced one multi-frame period of time) since the sink node PE2 completes calendar switching (that is, after t2), the sink node PE2 resumes to a normal processing mode, and sends a path layer message "slot reduction completion" to the upstream node P2; after receiving the path layer message "slot reduction completion", the P2 enters a normal processing mode, and continues to send the path layer message "slot reduction completion" to the upstream node P1; the P1 receives the "slot reduction completion", and resumes a normal processing mode, and continues to send the path layer message "slot reduction completion" to the upstream node/source PE1.

In operation 2, the source PE1 receives the path layer message "slot reduction completion", and sends a "slot reduction completion confirmation" to the downstream node P1; the P1 receives the path layer message "slot reduction completion confirmation" and sends "slot reduction completion confirmation" to the downstream node P2; the P2 receives "slot reduction completion confirmation" and sends the path layer message "slot reduction completion confirmation" to the downstream/sink node PE2.

In operation 3, the PE2 receives the path layer message "bandwidth reduction completion confirmation", learns that all nodes have completed the adjustment, and reports an adjustment result.

### 5. Reverse adjustment phase

According to the above operations, adjustment can be performed in a reverse direction of reducing the path bandwidth.

It can be understood that, in the exemplary implementation process of the above embodiments of the present disclosure, the number of increased or deleted slots, the number of increased or deleted bandwidths, the number of increased or deleted services, and other easily conceivable transformations are not limited in the embodiments of the present disclosure, but should be included in the protection scope of the present disclosure.

Through the description of the above implementations, those having ordinary skill in the art can clearly understand that the method according to the above embodiments can be implemented by means of software plus a necessary general hardware platform. Of course, it can also be implemented by hardware, but in many cases the former is a better implementation. Based on such understanding, the technical solution of the present disclosure essentially or the part that contributes to the prior art can be embodied in the form of a software product, and the computer software product is stored in a storage medium (such as a ROM/RAM, a magnetic disk, an optical disc), and includes several instructions to enable a terminal device (which can be a mobile phone, a computer, a server, or a network device, etc.) to execute the method described in individual embodiments of the present disclosure.

In this embodiment, a bandwidth reducing device is also provided, which is used to implement the above embodiments and exemplary implementations, and those that have been described will not be repeated. As used below, the term "module" may implement a combination of software and/or hardware with predetermined functions. The apparatus described in the following embodiments are preferably implemented by the software, but the hardware or a combination of the software and hardware is also possible and conceived.

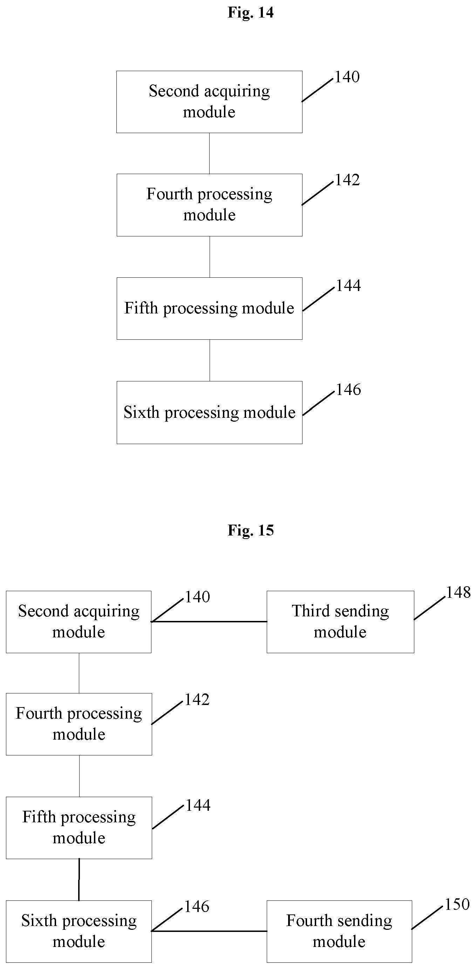

Fig. 14 is a structure diagram of an exemplary bandwidth reducing apparatus according to an embodiment of the present disclosure. As shown in Fig. 14, the apparatus is applied to respective nodes in a metropolitan area transport network. The apparatus includes:
a second acquiring module 140, configured to acquire, by respective nodes, a slot reduction request according to a specified rule, wherein the slot reduction request is used for instructing the respective nodes to start a slot adjustment of a section layer within a predetermined period of time;
a fourth processing module 142, configured to send, by the respective nodes, a slot reduction confirmation message according to a specified rule in a case where the respective nodes are capable of processing the slot reduction request;
a fifth processing module 144, configured to reduce a bandwidth of an entire path layer corresponding to the respective nodes based on the slot reduction confirmation message;
a sixth processing module 146, configured to reduce second slots of the section layer between every two nodes in the respective nodes after the reduction of the bandwidth of the respective nodes is completed.

With the embodiments of the present disclosure, the respective nodes acquire the slot reduction request according to the first specified rule, wherein the slot reduction confirmation message is used for instructing the respective nodes to start the slot adjustment of the section layer within the predetermined period of time; in a case where the respective nodes are capable of processing the slot reduction request, the respective nodes send the slot reduction confirmation message according to the second specified rule; the respective nodes reduce a bandwidth of an entire path layer corresponding to the respective nodes based on the slot reduction confirmation message, and reduce the second slots of the section layer between every two nodes in the respective nodes after the reduction of the bandwidth of the respective nodes is completed. The technical solution solves the problem that in the metropolitan area transport network, the lossless adjustment of the bandwidth cannot be realized, and the bandwidth adjustment manner is not perfect in the related technology.

In the embodiments of the present disclosure, Fig. 15 is another structure diagram of an exemplary bandwidth reducing apparatus according to an embodiment of the present disclosure. As shown in Fig. 15, the apparatus includes at least one of the followings:
a third sending module 148, configured to send, by each node in the respective nodes, the slot reduction request to the downstream node in a case where the node is capable of processing the slot reduction request and the node has a downstream node;
a third sending module 148 is further configured to send the slot reduction confirmation message corresponding to the slot reduction request to a fifth node in a case where a sink node in the respective nodes receives the slot reduction request sent by an upstream node of the sink node, and the respective nodes are capable of processing the slot reduction request, wherein the slot reduction confirmation message is used for instructing a node that receives the slot reduction confirmation message to perform a slot configuration, and the fifth node is the upstream node of the sink node;
the third sending module 148 is further configured to send a slot reduction rejection message corresponding to the slot reduction request to an upstream node of the fifth node in a case where a sixth node in the respective nodes does not allow processing the slot reduction request.

In the embodiment of the present disclosure, as shown in Fig. 15, the apparatus further includes: the third sending module 148, further configured to send the slot reduction confirmation message to a seventh node in a case where the fifth node has an upstream node, so that respective nodes receives the slot reduction confirmation message, wherein the seventh node is the upstream node of the fifth node.

In the embodiment of the present disclosure, as shown in Fig. 14, the fifth processing module 144 is further configured to reduce, by a source node in the respective nodes, the bandwidth of the entire path layer corresponding to the respective nodes based on the slot reduction confirmation message, so as to reduce the bandwidth of nodes other than the source node.

In the embodiment of the present disclosure, as shown in Fig. 14, the sixth processing module 146 is further configured to respond, by respective nodes, to the slot reduction confirmation message, and a source node in the respective nodes sends a second section layer message to an eighth node, wherein in a case where the eighth node has a downstream node, the second section layer message is forwarded to the respective nodes so that the respective nodes acquire the second section layer message, and the eighth node is a downstream node of the source node; the respective nodes respond to the second section layer message and reduce the second slots of the section layer between every two nodes in the respective nodes based on the second section layer message.

In the embodiment of the present disclosure, as shown in Fig. 15, the apparatus further includes:
a fourth sending module 150, configured to send, by the respective nodes, a slot reduction completion message from a source node in the respective nodes, through one or more intermediate nodes in the respective nodes, to a sink node in the respective nodes, wherein the node sending the slot reduction completion message represents that the node which sends the slot reduction completion message has completed the reduction of the slots.

The fourth sending module 150 is further configured to send, by the respective nodes, a slot reduction completion confirmation message from the sink node in the respective nodes, through the one or more intermediate nodes in the respective nodes, to the source node in the respective nodes, wherein the node receiving the slot reduction completion confirmation message represents that the node which receives the slot reduction completion confirmation message has determined that the node which sends the slot reduction completion confirmation message has completed the reduction of the slots.

In the embodiment of the present disclosure, as shown in Fig. 15, the fourth sending module 150 is further configured to send, by the respective nodes, a bandwidth reduction completion message from a source node in the respective nodes, through one or more intermediate nodes in the respective nodes, to a sink node in the respective nodes, wherein the node sending the bandwidth reduction completion message represents that the node which sends the bandwidth reduction completion message has completed the reduction of the bandwidth.

The fourth sending module 150 is further configured to send, by the respective nodes, a bandwidth reduction completion confirmation message from the sink node in the respective nodes, through the one or more intermediate nodes in the respective nodes, to the source node in the respective nodes, wherein the node receiving the bandwidth reduction completion confirmation message represents that the node which receives the bandwidth reduction completion confirmation message has determined that the node which sends the bandwidth reduction completion confirmation message has completed the reduction of the bandwidth.

In the embodiment of the present disclosure, there is also provided a storage medium including a stored program, wherein the method described in any one of the above is carried out when the program is executed.

As an exemplary implementation of this embodiment, the above storage medium may be configured to store program codes for executing the following operations:
S1, acquiring, by respective nodes, a slot reduction request according to a first specified rule, wherein the slot reduction request is used for instructing the respective nodes to start a slot adjustment of a section layer within a predetermined period of time;
S2, in a case where the respective nodes are capable of processing the slot reduction request, sending, by the respective nodes, a slot reduction confirmation message according to a second specified rule;
S3, reducing, by the respective nodes, a bandwidth of an entire path layer corresponding to the respective nodes based on the slot reduction confirmation message;
S4, reducing second slots of the section layer between every two nodes in the respective nodes after the reduction of the bandwidth of the respective nodes is completed. As an exemplary implementation of this embodiment, the above storage medium may include, but is not limited to: various media that can store program codes, such as U disk, Read-Only Memory (ROM), Random Access Memory (RAM), mobile hard disks, magnetic disks, or optical disks.

**In** the embodiment of the present disclosure, there is also provided an electronic apparatus including a memory and a processor, wherein a computer program is stored in the memory, and the processor is configured to execute the computer program so as to carry out the operations of any one of the above method embodiments.

As an exemplary implementation of this embodiment, the above electronic apparatus may further include a transmission device and an input-output device, wherein the transmission device is connected to the above processor, and the input-output device is connected to the above processor.

As an exemplary implementation of this embodiment, the above processor may be configured to perform the following operations through the computer program:
S1, acquiring, by respective nodes, a slot reduction request according to a first specified rule, wherein the slot reduction request is used for instructing the respective nodes to start a slot adjustment of a section layer within a predetermined period of time;
S2, in a case where the respective nodes are capable of processing the slot reduction request, sending, by the respective nodes, a slot reduction confirmation message according to a second specified rule;
S3, reducing, by the respective nodes, a bandwidth of an entire path layer corresponding to the respective nodes based on the slot reduction confirmation message;
S4, reducing second slots of the section layer between every two nodes in the respective nodes after the reduction of the bandwidth of the respective nodes is completed.

For specific examples in this embodiment, reference may be made to the examples described in the above embodiments and exemplary implementations, and details are not described herein again in this embodiment.

Obviously, those having ordinary skill in the art should understand that the aforementioned modules or operations of the present disclosure can be implemented by a general computing device, and they can be concentrated on a single computing device, or distributed on a network composed of multiple computing devices. Alternatively, they can be implemented with program codes executable by the computing device, so that they can be stored in the storage device for execution by the computing device, and in some cases, the operations shown or described can be executed in a different order other than here, or they are fabricated into individual integrated circuit modules separately, or multiple modules or operations of them are fabricated into a single integrated circuit module for implementation. In this way, the present disclosure is not limited to any specific hardware and software combination.

### Industrial applicability

Based on the above technical solutions, the respective nodes acquire a slot reduction request according to a first specified rule, wherein the slot reduction request is used for instructing the respective nodes to start a slot adjustment of a section layer within a predetermined period of time; in a case where the respective nodes are capable of processing the slot reduction request, the respective nodes send a slot reduction confirmation message according to a second specified rule; the respective nodes reduce a bandwidth of an entire path layer corresponding to the respective nodes based on the slot reduction confirmation message, and reduce second slots of the section layer between every two nodes **in** the respective nodes after the reduction of the bandwidth of the respective nodes is completed. The technical solution solves the problem that in the metropolitan area transport network, the lossless adjustment of the bandwidth cannot be realized, and the bandwidth adjustment manner is not perfect **in** the related technology.

## Claims

1. A bandwidth increasing method, applied to a metropolitan area transport network, said method comprising the steps of :
acquiring (S302), by respective nodes, a slot increase request according to a first specified rule, wherein the slot increase request is used for instructing the respective nodes to start a slot adjustment of a section layer within a predetermined period of time;
in a case where the respective nodes are capable of processing the slot increase request, sending (S304), by the respective nodes, a slot increase confirmation message according to a second specified rule;
increasing (S306), by the respective nodes, slots of the section layer between every two nodes in the respective nodes based on the slot increase confirmation message; and
after the increase of the slots of the section layer is completed, increasing (S308), by the respective nodes, a bandwidth of an entire path layer corresponding to the respective nodes, wherein after increasing (S308), by the respective nodes, the bandwidth of the entire path layer corresponding to the respective nodes after the increase of the slots of the section layer is completed, the method further comprises:
sending, by the respective nodes, a bandwidth increase completion message from a source node in the respective nodes, through one or more intermediate nodes in the respective nodes, to a sink node in the respective nodes, wherein the node sending the bandwidth increase completion message represents that the node which sends the bandwidth increase completion message has completed the increase of the bandwidth;
sending, by the respective nodes, a bandwidth increase completion confirmation message from the sink node in the respective nodes, through the one or more intermediate nodes in the respective nodes, to the source node in the respective nodes, wherein the node receiving the bandwidth increase completion confirmation message represents that the node which receives the bandwidth increase completion confirmation message has determined that the node which sends the bandwidth increase completion confirmation message has completed the increase of the bandwidth.

2. The method according to claim 1, wherein after the step of acquiring (S302), by the respective nodes, the slot increase request according to the first specified rule, the method further comprises:
for each node in the respective nodes, in a case where the node is capable of processing the slot increase request and the node has a downstream node, a step of sending the slot increase request to the downstream node; and
in a case where a sink node in the respective nodes receives the slot increase request sent by an upstream node of the sink node, and the respective nodes are capable of processing the slot increase request, a step of sending the slot increase confirmation message corresponding to the slot increase request to a first node, wherein the slot increase confirmation message is used for instructing a node that receives the slot increase confirmation message to perform a slot configuration, and the first node is the upstream node of the sink node; and
in a case where a second node in the respective nodes does not allow processing the slot increase request, a step of sending a slot increase rejection message corresponding to the slot increase request to an upstream node of the first node.

3. The method according to claim 2, wherein in a case where the sink node of the respective nodes receives the slot increase request sent by the upstream node of the sink node, and the respective nodes are capable of processing the slot increase request, after the step of sending the slot increase confirmation message corresponding to the slot increase request to the first node, the method further comprises:
in a case where the first node has an upstream node, a step of sending the slot increase confirmation message to a third node, so that the respective nodes receive the slot increase confirmation message, wherein the third node is the upstream node of the first node.

4. The method according to claim 1, wherein the step of increasing (S306), by the respective nodes, the slots of the section layer between every two nodes in the respective nodes based on the slot increase confirmation message, comprises the steps of:
responding, by the respective nodes, to the slot increase confirmation message, and sending, by a source node in the respective nodes, a first section layer message to a fourth node, wherein in a case where the fourth node has a downstream node, the first section layer message is forwarded to the respective nodes so that the respective nodes acquire the first section layer message, and the fourth node is a downstream node of the source node; and
responding, by the respective nodes, to the first section layer message and increasing, by the respective nodes, the slots of the section layer between every two nodes in the respective nodes based on the first section layer message.

5. The method according to claim 1, wherein the step of increasing (S308), by the respective nodes, the bandwidth of the entire path layer corresponding to the respective nodes comprises a step of :
increasing the bandwidth of a source node in the respective nodes, so as to increase the bandwidth of the entire path layer corresponding to the respective nodes.

6. The method according to claim 1, wherein after the step of increasing (S308), by the respective nodes, the bandwidth of the entire path layer corresponding to the respective nodes after the increase of the slots of the section layer is completed, the method further comprises the steps of :
sending, by the respective nodes, a slot increase completion message from a source node in the respective nodes, through one or more intermediate nodes in the respective nodes, to a sink node in the respective nodes, wherein the node sending the slot increase completion message represents that the node which sends the slot increase completion message has completed the increase of the slots;
sending, by the respective nodes, a slot increase completion confirmation message from the sink node in the respective nodes, through the one or more intermediate nodes in the respective nodes, to the source node in the respective nodes, wherein the node receiving the slot increase completion confirmation message represents that the node which receives the slot increase completion confirmation message has determined that the node which sends the slot increase completion confirmation message has completed the increase of the slots.

7. An electronic apparatus comprising a memory and a processor, wherein a computer program is stored in the memory, and when said computer program is executed by said processor cause said electronic apparatus to perform all the steps of a method according to any one of claims 1 to 6.

## Patentansprüche

1. Verfahren für eine Bandbreitenerhöhung, das auf ein Großstadttransportnetz angewendet wird, das Verfahren umfassend die Schritte:
Erfassen (S302), durch jeweilige Knoten, einer Anforderung einer Slot-Erhöhung gemäß einer ersten festgelegten Regel, wobei die Anforderung der Slot-Erhöhung zum Anweisen der jeweiligen Knoten verwendet wird, um innerhalb einer zuvor bestimmten Zeitspanne mit einer Slot-Anpassung einer Abschnittsschicht zu beginnen;
in einem Fall, in dem die jeweiligen Knoten in der Lage sind, die Anforderung der Slot-Erhöhung zu verarbeiten, Senden (S304), durch die jeweiligen Knoten, einer Bestätigungsnachricht der Slot-Erhöhung gemäß einer zweiten festgelegten Regel;
Erhöhen (S306), durch die jeweiligen Knoten, der Slots der Abschnittsschicht zwischen jeden zwei Knoten in den jeweiligen Knoten basierend auf der Bestätigungsnachricht der Slot-Erhöhung; und
nachdem die Erhöhung der Slots der Abschnittsschicht abgeschlossen ist, Erhöhen (S308), durch die jeweiligen Knoten, einer Bandbreite einer gesamten Pfadschicht, die den jeweiligen Knoten entspricht, wobei nach dem Erhöhen (S308), durch die jeweiligen Knoten, der Bandbreite der gesamten Pfadschicht, die den jeweiligen Knoten entspricht, nachdem die Erhöhung der Slots der Abschnittsschicht abgeschlossen ist, das Verfahren ferner umfasst:
Senden, durch die jeweiligen Knoten, einer Bandbreitenerhöhungsabschlussnachricht von einem Quellknoten in den jeweiligen Knoten über einen oder mehrere Zwischenknoten in den jeweiligen Knoten an einen Senkenknoten in den jeweiligen Knoten, wobei der Knoten, der die Bandbreitenerhöhungsabschlussnachricht sendet, darstellt, dass der Knoten, der die Bandbreitenerhöhungsabschlussnachricht sendet, die Erhöhung der Bandbreite abgeschlossen hat;
Senden, durch die jeweiligen Knoten, einer Abschlussbestätigungsnachricht der Bandbreitenerhöhung von dem Senkenknoten in den jeweiligen Knoten über den einen oder die mehreren Zwischenknoten in den jeweiligen Knoten an den Quellknoten in den jeweiligen Knoten, wobei der Knoten, der die Abschlussbestätigungsnachricht der Bandbreitenerhöhung empfängt, darstellt, dass der Knoten, der die Abschlussbestätigungsnachricht der Bandbreitenerhöhung empfängt, bestimmt hat, dass der Knoten, der die Abschlussbestätigungsnachricht der Bandbreitenerhöhung sendet, die Bandbreitenerhöhung abgeschlossen hat.

2. Verfahren nach Anspruch 1, wobei das Verfahren nach dem Schritt des Erfassens (S302), durch die jeweiligen Knoten, der Anforderung der Slot-Erhöhung gemäß der ersten festgelegten Regel ferner umfasst:
für jeden Knoten in den jeweiligen Knoten, in einem Fall, in dem der Knoten in der Lage ist, die Anforderung der Slot-Erhöhung zu verarbeiten und der Knoten einen Downstream-Knoten aufweist, einen Schritt des Sendens der Anforderung der Slot-Erhöhung an den Downstream-Knoten; und
in einem Fall, in dem ein Senkenknoten in den jeweiligen Knoten die Anforderung der Slot-Erhöhung empfängt, die durch einen Upstream-Knoten des Senkenknotens gesendet wird, und die jeweiligen Knoten in der Lage sind, die Anforderung der Slot-Erhöhung zu verarbeiten, ein Schritt des Sendens der Bestätigungsnachricht der Slot-Erhöhung, die der Anforderung der Slot-Erhöhung entspricht, an einen ersten Knoten, wobei die Bestätigungsnachricht der Slot-Erhöhung zum Anweisen eines Knotens, der die Bestätigungsnachricht der Slot-Erhöhung empfängt, verwendet wird, um eine Slot-Konfiguration durchzuführen, und der erste Knoten der Upstream-Knoten des Senkenknotens ist; und
in einem Fall, in dem ein zweiter Knoten in den jeweiligen Knoten das Verarbeiten der Anforderung der Slot-Erhöhung nicht zulässt, ein Schritt zum Senden einer Ablehnungsnachricht der Slot-Erhöhung, die der Anforderung der Slot-Erhöhung entspricht, an einen Upstream-Knoten des ersten Knotens.

3. Verfahren nach Anspruch 2, wobei in einem Fall, in dem der Senkenknoten der jeweiligen Knoten die Anforderung der Slot-Erhöhung empfängt, die durch den Upstream-Knoten des Senkenknotens gesendet wird, und die jeweiligen Knoten in der Lage sind, die Anforderung der Slot-Erhöhung zu verarbeiten, nach dem Schritt des Sendens der Bestätigungsnachricht der Slot-Erhöhung, die der Anforderung der Slot-Erhöhung entspricht, an den ersten Knoten, das Verfahren ferner umfasst:
in einem Fall, in dem der erste Knoten einen Upstream-Knoten aufweist, ein Schritt zum Senden der Bestätigungsnachricht der Slot-Erhöhung an einen dritten Knoten, sodass die jeweiligen Knoten die Bestätigungsnachricht der Slot-Erhöhung empfangen, wobei der dritte Knoten der Upstream-Knoten des ersten Knotens ist.

4. Verfahren nach Anspruch 1, wobei der Schritt des Erhöhens (S306), durch die jeweiligen Knoten, der Slots der Abschnittsschicht zwischen jeden zwei Knoten in den jeweiligen Knoten basierend auf der Bestätigungsnachricht der Slot-Erhöhung die Schritte umfasst:
Antworten, durch die jeweiligen Knoten, auf die Bestätigungsnachricht der Slot-Erhöhung und Senden, durch einen Quellknoten in den jeweiligen Knoten, einer Nachricht der ersten Abschnittsschicht an einen vierten Knoten, wobei in einem Fall, in dem der vierte Knoten einen Downstream-Knoten aufweist, die Nachricht der ersten Abschnittsschicht an die jeweiligen Knoten weitergeleitet wird, sodass die jeweiligen Knoten die Nachricht der ersten Abschnittsschicht erfassen, und der vierte Knoten ein Downstream-Knoten des Quellknotens ist; und
Antworten., durch die jeweiligen Knoten, auf die Nachricht der ersten Abschnittsschicht und Erhöhen, durch die jeweiligen Knoten, der Slots der Abschnittsschicht zwischen jeden zwei Knoten in den jeweiligen Knoten basierend auf der Nachricht der ersten Abschnittsschicht.

5. Verfahren nach Anspruch 1, wobei der Schritt des Erhöhens (S308), durch die jeweiligen Knoten, der Bandbreite der gesamten Pfadschicht, die den jeweiligen Knoten entspricht, einen Schritt umfasst:
Erhöhen der Bandbreite eines Quellknotens in den jeweiligen Knoten, um die Bandbreite der gesamten Pfadschicht zu erhöhen, die den jeweiligen Knoten entspricht.

6. Verfahren nach Anspruch 1, wobei nach dem Schritt des Erhöhens (S308), durch die jeweiligen Knoten, der Bandbreite der gesamten Pfadschicht, die den jeweiligen Knoten entspricht, nachdem die Erhöhung der Slots der Abschnittsschicht abgeschlossen ist, das Verfahren ferner die Schritte umfasst:
Senden, durch die jeweiligen Knoten, einer Abschlussnachricht der Slot-Erhöhung von einem Quellknoten in den jeweiligen Knoten über einen oder mehrere Zwischenknoten in den jeweiligen Knoten an einen Senkenknoten in den jeweiligen Knoten, wobei der Knoten, der die Abschlussnachricht der Slot-Erhöhung sendet, darstellt, dass der Knoten, der die Abschlussnachricht der Slot-Erhöhung sendet, die Erhöhung der Slots abgeschlossen hat;
Senden, durch die jeweiligen Knoten, einer Abschlussbestätigungsnachricht der Slot-Erhöhung von dem Senkenknoten in den jeweiligen Knoten über den einen oder die mehreren Zwischenknoten in den jeweiligen Knoten an den Quellknoten in den jeweiligen Knoten, wobei der Knoten, der die Abschlussbestätigungsnachricht der Slot-Erhöhung empfängt, darstellt, dass der Knoten, der die Abschlussbestätigungsnachricht der Slot-Erhöhung empfängt, bestimmt hat, dass der Knoten, der die Abschlussbestätigungsnachricht der Slot-Erhöhung sendet, die Erhöhung der Slots abgeschlossen hat.

7. Elektronische Einrichtung, umfassend einen Speicher und einen Prozessor, wobei ein Computerprogramm auf dem Speicher gespeichert ist und wenn das Computerprogramm durch den Prozessor ausgeführt wird, Veranlassen der elektronischen Einrichtung, alle Schritte eines Verfahrens nach einem der Ansprüche 1 bis 6 durchzuführen.

## Revendications

1. Procédé d'augmentation de la bande passante, appliquée à un réseau de transport métropolitain, ledit procédé comprenant les étapes consistant à :
acquérir (S302), par les nœuds respectifs, une demande d'augmentation de créneaux conformément à une première règle spécifiée, dans lequel la demande d'augmentation de créneaux est utilisée pour ordonner aux nœuds respectifs d'initier un ajustement de créneaux d'une couche de section dans une période de temps prédéterminée ;
dans le cas où les nœuds respectifs sont aptes à traiter la demande d'augmentation de créneaux, envoi (S304), par les nœuds respectifs, d'un message de confirmation d'augmentation de créneaux conformément à une seconde règle spécifiée ;
augmenter (S306), par les nœuds respectifs, des créneaux de la couche de section entre chaque paire de nœuds parmi les nœuds respectifs, sur la base du message de confirmation d'augmentation de créneaux ; et
après l'achèvement de l'augmentation des créneaux de la couche de section, augmenter (S308), par les nœuds respectifs, une bande passante d'une couche entière de trajet correspondant aux nœuds respectifs, dans lequel, après l'augmentation (S308), par les nœuds respectifs, de la bande passante de la couche entière de trajet correspondant aux nœuds respectifs après l'augmentation des créneaux de la couche de section, le procédé comprend en outre :
envoyer, par les nœuds respectifs, un message d'achèvement d'augmentation de bande passante depuis un nœud source parmi les nœuds respectifs, à travers un ou plusieurs nœuds intermédiaires parmi les nœuds respectifs, vers un nœud récepteur parmi les nœuds respectifs, dans lequel le nœud envoyant le message d'achèvement d'augmentation de bande passante indique que le nœud qui envoie le message d'achèvement d'augmentation de bande passante a achevé l'augmentation de la bande passante ;
envoyer, par les nœuds respectifs, un message de confirmation d'achèvement d'augmentation de bande passante depuis le nœud récepteur parmi les nœuds respectifs, à travers le ou les nœuds intermédiaires parmi les nœuds respectifs, vers le nœud source parmi les nœuds respectifs, dans lequel le nœud recevant le message de confirmation d'achèvement d'augmentation de bande passante indique que le nœud qui reçoit le message de confirmation d'achèvement d'augmentation de bande passante a déterminé que le nœud qui envoie le message de confirmation d'achèvement d'augmentation de bande passante a achevé l'augmentation de la bande passante.

2. Procédé selon la revendication 1, dans lequel, après l'étape d'acquisition (S302), par les nœuds respectifs, de la demande d'augmentation de créneaux conformément à la première règle spécifiée, le procédé comprend en outre :
pour chaque nœud parmi les nœuds respectifs, dans le cas où le nœud est apte à traiter la demande d'augmentation de créneaux et où le nœud présente un nœud en aval, une étape d'envoi de la demande d'augmentation de créneaux au nœud en aval ; et
dans le cas où un nœud récepteur parmi les nœuds respectifs reçoit la demande d'augmentation de créneaux envoyée par un nœud en amont du nœud récepteur et où les nœuds respectifs sont aptes à traiter la demande d'augmentation de créneaux, une étape d'envoi du message de confirmation d'augmentation de créneaux correspondant à la demande d'augmentation de créneaux à un premier nœud, dans lequel le message de confirmation d'augmentation de créneaux est utilisé pour ordonner à un nœud qui reçoit le message de confirmation d'augmentation de créneaux d'effectuer une configuration de créneaux et le premier nœud est le nœud en amont du nœud de réception ; et
dans le cas où un deuxième nœud parmi les nœuds respectifs ne permet pas le traitement de la demande d'augmentation de créneaux, une étape d'envoi d'un message de rejet d'augmentation de créneaux correspondant à la demande d'augmentation de créneaux à un nœud en amont du premier nœud.

3. Procédé selon la revendication 2, dans lequel, dans le cas où le nœud récepteur parmi les nœuds respectifs reçoit la demande d'augmentation de créneaux envoyée par le nœud en amont du nœud récepteur et où les nœuds respectifs sont aptes à traiter la demande d'augmentation de créneaux, après l'étape d'envoi au premier nœud du message de confirmation d'augmentation de créneaux correspondant à la demande d'augmentation de créneaux, le procédé comprend en outre :
dans le cas où le premier nœud présente un nœud en amont, une étape d'envoi du message de confirmation d'augmentation de créneaux à un troisième nœud, de telle sorte que les nœuds respectifs reçoivent le message de confirmation d'augmentation de créneaux, dans lequel le troisième nœud est le nœud en amont du premier nœud.

4. Procédé selon la revendication 1, dans lequel l'étape d'augmentation (S306), par les nœuds respectifs, des créneaux de la couche de section entre chaque paire de nœuds parmi les nœuds respectifs sur la base du message de confirmation d'augmentation des créneaux, comprend les étapes consistant à :
répondre, par les nœuds respectifs, au message de confirmation d'augmentation de créneaux et envoyer, par un nœud source parmi les nœuds respectifs, un premier message de couche de section à un quatrième nœud, dans lequel, dans le cas où le quatrième nœud présente un nœud en aval, le premier message de couche de section est transmis aux nœuds respectifs de telle sorte que les nœuds respectifs acquièrent le premier message de couche de section et le quatrième nœud est un nœud en aval du nœud source ; et
répondre, par les nœuds respectifs, au premier message de la couche de section et augmenter, par les nœuds respectifs, les créneaux de la couche de section entre chaque paire de nœuds parmi les nœuds respectifs sur la base du premier message de la couche de section.

5. Procédé selon la revendication 1, dans lequel l'étape d'augmentation (S308), par les nœuds respectifs, de la bande passante de la couche entière de trajet correspondant aux nœuds respectifs comprend une étape consistant à :
augmenter la bande passante d'un nœud source parmi les nœuds respectifs, de manière à augmenter la bande passante de la couche entière de trajet correspondant aux nœuds respectifs.

6. Procédé selon la revendication 1, dans lequel, après l'étape d'augmentation (S308), par les nœuds respectifs, de la bande passante de la couche entière de trajet correspondant aux nœuds respectifs après l'achèvement de l'augmentation des créneaux de la couche de section, le procédé comprend en outre les étapes consistant à :
envoyer, par les nœuds respectifs, un message d'achèvement de l'augmentation des créneaux depuis un nœud source parmi les nœuds respectifs, à travers un ou plusieurs nœuds intermédiaires parmi les nœuds respectifs, vers un nœud récepteur parmi les nœuds respectifs, dans lequel le nœud envoyant le message d'achèvement d'augmentation de créneaux indique que le nœud qui envoie le message d'achèvement d'augmentation de créneaux a achevé l'augmentation des créneaux ;
envoyer, par les nœuds respectifs, un message de confirmation d'achèvement d'augmentation de créneaux depuis le nœud récepteur parmi les nœuds respectifs, à travers un ou plusieurs nœuds intermédiaires parmi les nœuds respectifs, vers le nœud source parmi les nœuds respectifs, dans lequel le nœud recevant le message de confirmation d'achèvement d'augmentation de créneaux indique que le nœud qui reçoit le message de confirmation d'achèvement d'augmentation de créneaux a déterminé que le nœud qui envoie le message de confirmation d'achèvement d'augmentation de créneaux a achevé l'augmentation des créneaux.

7. Appareil électronique comprenant une mémoire et un processeur, dans lequel un programme informatique est stocké dans la mémoire et lorsque ledit programme informatique est exécuté par ledit processeur, ledit appareil électronique est amené à effectuer toutes les étapes d'un procédé selon l'une quelconque des revendications 1 à 6.
